# EUROPEAN PATENT APPLICATION

(11) **EP 4 645 549 A1**
(43) Date of publication of application: **05.11.2025**
(21) Application number: 23909193.7
(22) Date of filing: 15.08.2023
(51) Int. Cl.: H01M 50/244, H01M 50/204, H01M 50/249

(54) **BATTERY AND ELECTRIC APPARATUS**

(30) Priority: 30.12.2022 WO PCT/CN2022/144191
(71) Applicant: Contemporary Amperex Technology Co., Limited, Ningde, Fujian 352100 (CN)
(72) Inventor: SHI, Weigang, Ningde, Fujian 352100 (CN); LUO, Wenchao, Ningde, Fujian 352100 (CN); WANG, Xiaofang, Ningde, Fujian 352100 (CN); SHI, Si, Ningde, Fujian 352100 (CN); CHEN, Xuan, Ningde, Fujian 352100 (CN); ZHANG, Lifei, Ningde, Fujian 352100 (CN); WANG, Zhi, Ningde, Fujian 352100 (CN)
(74) Representative: Thoma, Michael
(86) International application number: PCT/CN2023/113172
(87) International publication number: WO 2024/139252

(57) **Abstract**

A battery and an electric apparatus are provided. The battery includes a battery cell, a first housing, and a second housing. The first housing includes a first sealing surface. The second housing includes a first surface and a second sealing surface, where the first surface is configured to support the battery cell, the first housing and the second housing jointly define a closed space for accommodating the battery cell, and the first sealing surface and the second sealing surface cooperatively form a first sealing interface for sealing the closed space. The first sealing interface intersects with the first surface. The technical solution can improve the energy density of the battery.

## Description

### CROSS-REFERENCE TO RELATED APPLICATIONS

This application claims priority to PCT Patent Application No. PCT/CN2022/144191, filed on December 30, 2022 and entitled "BATTERY AND ELECTRIC APPARATUS," which is incorporated herein by reference in its entirety.

### TECHNICAL FIELD

The present application relates to the field of battery technologies, and more particularly, to a battery and an electric apparatus.

### BACKGROUND

Energy conservation and emission reduction are key to the sustainable development of the automotive industry, and electric vehicles, due to their advantages in energy efficiency and environmental protection, have become an important component of the sustainable development of the automotive industry. For electric vehicles, battery technology is a critical factor in their development.

In the development of battery technology, how to improve the energy density of batteries is a technical problem that urgently needs to be addressed.

### SUMMARY

The present application provides a battery and an electric apparatus capable of improving the energy density of the battery.

The present application is implemented by the following technical solutions.

According to a first aspect, the present application provides a battery including a battery cell, a first housing, and a second housing. The first housing includes a first sealing surface. The second housing includes a first surface and a second sealing surface, where the first surface is configured to support the battery cell, the first housing and the second housing jointly define a closed space for accommodating the battery cell, and the first sealing surface and the second sealing surface cooperatively form a first sealing interface for sealing the closed space. The first sealing interface intersects with the first surface.

In the above solution, by configuring the first sealing interface to intersect with the first surface, that is, the first sealing interface is not parallel to the first surface, the projected area of the first sealing member onto the first surface can be reduced, and the space occupied by the first sealing interface in a direction parallel to the first surface can be reduced, thereby improving the space utilization rate of the battery in the direction parallel to the first surface to accommodate more battery cells or reduce the volume of the battery, thus enhancing the volumetric energy density of the battery.

According to some embodiments of the present application, the first sealing surface and the second sealing surface are parallel to a first direction, and the first sealing surface and the second sealing surface intersect with a second direction, where the first direction and the second direction are both parallel to the first surface.

In the above solution, the first sealing surface and the second sealing surface intersect with the second direction, meaning the first sealing interface intersects with the second direction. By configuring the first sealing interface to intersect with the second direction, the projected area of the first sealing interface onto the first surface can be reduced, and the space occupied by the first sealing interface in the second direction can be reduced, thereby improving the space utilization rate of the battery in the second direction to accommodate more battery cells or reduce the volume of the battery, thus enhancing the volumetric energy density of the battery. For example, configuring the first sealing interface to be perpendicular to the second direction enables a sealed connection between the first housing and the second housing without requiring a flange structure protruding along the second direction, thereby improving the space utilization rate of the battery in the second direction to accommodate more battery cells or reduce the volume of the battery, thus enhancing the volumetric energy density of the battery.

According to some embodiments of the present application, a first sealing member is disposed between the first sealing surface and the second sealing surface, where the first sealing member is located on a side, closer to the closed space, of one of the first sealing surface and the second sealing surface that is farther from the closed space.

In the above solution, by disposing the first sealing member between the first sealing surface and the second sealing surface, the sealing performance between the first sealing surface and the second sealing surface can be effectively improved, reducing the risk of external substances entering the closed space and causing damage to the battery cell, and thus enhancing the reliability of the battery.

According to some embodiments of the present application, along a width direction of the first sealing member, one end of the first sealing member is close to the closed space, the other end of the first sealing member is close to the exterior of the battery, and the width direction of the first sealing member intersects with the first surface.

In the above solution, by configuring the width direction of the first sealing member to intersect with the first surface, the width direction of the first sealing member is not parallel to the first surface. This allows the projected area of the first sealing member onto the first surface to be reduced while the first sealing member plays a good sealing role, thereby reducing the space occupied by the first sealing member in a direction parallel to the first surface. This improves the space utilization rate of the battery in the direction parallel to the first surface to accommodate more battery cells or reduce the volume of the battery, thus enhancing the volumetric energy density of the battery.

According to some embodiments of the present application, the second housing includes a second end wall and a second sidewall, where the first surface is located on the second end wall, at least a portion of the second sealing surface is disposed on the second sidewall, the second sidewall is connected to an end of the second end wall in the second direction, and along the second direction, a projection of the second sidewall is at least partially located on a side of the first surface close to the battery cell.

In the above solution, the second housing includes the second end wall and the second sidewall, where the second end wall has the first surface to support the battery, and the second sealing surface can be at least partially located on the second sidewall. This eliminates the need for the thickness of the second end wall to be set large to meet the width requirements of the first sealing member. While meeting the installation requirements of the first sealing member, the second housing can be designed to be relatively lightweight or cost-effective.

According to some embodiments of the present application, along the second direction, a projection of the first sealing member is at least partially located on a side of the first surface close to the battery cell.

In the above solution, the second direction may be the arrangement direction of the first sealing surface and the second sealing surface, or the thickness direction of the first sealing surface. The projection of the first sealing member along the second direction being at least partially located on a side of the first surface close to the battery cell allows the first sealing member to have a smaller dimension in the second direction while maintaining a large width, thereby improving the sealing performance between the first sealing surface and the second sealing surface while minimizing spatial occupation in the second direction, and enabling the battery to have high reliability.

According to some embodiments of the present application, along the second direction, the projection of the first sealing member and the projection of the battery cell at least partially overlap.

In the above solution, the projection of the first sealing member along the second direction at least partially overlaps with the projection of the battery cell, allowing the space covered by the projection of the battery cell along the second direction to be utilized for arranging at least a portion of the first sealing member. This enables the first sealing member to have a smaller dimension in the second direction while maintaining a maximized sealing width, thereby effectively improving the sealing performance between the first sealing surface and the second sealing surface, and enabling the battery to have high reliability.

According to some embodiments of the present application, the second housing includes a second end wall, where the first surface is located on the second end wall, and the second sealing surface is a sidewall surface of the second end wall perpendicular to the second direction.

In the above solution, the structure of the second housing is simple. The second end wall of the second housing serves as a component for supporting the battery cell; in addition, the second end wall of the second housing also has the second sealing surface to connect to the first sealing surface of the first housing. This allows the second housing to be configured with a relatively simple structure while meeting the sealing requirements of the first sealing surface and the second sealing surface, thereby reducing the processing cost of the second housing.

According to some embodiments of the present application, the first housing includes a first end wall and a first sidewall connected to each other, where the first end wall includes a first end wall surface disposed opposite to the first surface, at least a portion of the first sealing surface is disposed on the first sidewall, and at least a portion of the first sidewall is located on a side of the first end wall surface close to the first surface.

In the above solution, the structure of the first housing is simple and easy to manufacture. The first housing includes the first end wall and the first sidewall connected to each other. By configuring at least a portion of the first sidewall to be located on a side of the first end wall surface close to the first surface, the first housing and the second housing can jointly define a closed space for accommodating the battery cell; in addition, the first sealing surface formed on the first sidewall can have a larger area to form a good connection and sealing performance with the second sealing surface, and enabling the battery to have high reliability.

According to some embodiments of the present application, at least a portion of the first sidewall is located on a side of the first surface away from the battery cell.

In the above solution, at least a portion of the first sidewall is located on a side of the first surface away from the battery cell, which can also be understood as that at least a portion of the first sealing surface is located on a side of the first surface away from the battery cell. This allows the area of the first sealing surface to be as large as possible to form better connection stability and sealing performance with the second sealing surface. In addition, when the first sealing surface and the second sealing surface are connected by other connecting members, since the first surface is the surface of the second end wall, the second end wall can provide a larger connection dimension for the connecting members in the second direction, thereby improving the lock-up strength of the connecting members on the first sealing surface and the second sealing surface, reducing the risk of detachment between the first sealing surface and the second sealing surface, and enabling the battery to have high reliability.

According to some embodiments of the present application, the second housing further includes a third sidewall, where the third sidewall is disposed at an end of the second end wall in the first direction, and the third sidewall extends toward the first housing and is connected to the first housing.

In the above solution, by disposing the third sidewall at the end of the second end wall in the first direction, the second end wall can be connected to the first housing through the third sidewall in the first direction, thereby improving the connection stability between the first housing and the second housing, and thus enhancing the reliability of the battery.

According to some embodiments of the present application, the third sidewall includes a first flat surface facing away from the first surface and a second flat surface intersecting with the second direction, where the first flat surface is configured to be sealingly connected to the first end wall, and the second flat surface is configured to be sealingly connected to the first sidewall.

In the above solution, the third sidewall is connected to the first housing through the first flat surface and the second flat surface, effectively improving the connection stability and sealing performance between the first housing and the second housing, and enabling the battery to have high reliability. The second flat surface intersecting with the second direction and being configured for sealing connection with the first sidewall effectively improves the space utilization rate of the battery in the second direction to accommodate more battery cells or reduce the volume of the battery, thus enhancing the volumetric energy density of the battery.

According to some embodiments of the present application, the battery further includes a second sealing member, where the second sealing member is disposed between the third sidewall and the first housing.

In the above solution, by disposing the second sealing member between the third sidewall and the first housing, the sealing performance between the third sidewall and the first housing can be effectively improved, enabling the battery to have high reliability.

According to some embodiments of the present application, the first flat surface and the second flat surface are connected by a transition surface, where the transition surface includes a sloped surface and/or a curved surface, a mating surface is formed at the junction between the first end wall and the first sidewall, and the mating surface is disposed corresponding to the transition surface.

In the above solution, by providing the transition surface, a smooth transition between the first flat surface and the second flat surface is enabled. This facilitates the second sealing member to be in close contact with the surface where the third sidewall and the first housing are connected, and reduces the risk of sealing failure due to damage to the second sealing member caused by interference from edges between the first flat surface and the second flat surface, enabling the battery to have high reliability.

According to some embodiments of the present application, the second sealing member includes a first sub-sealing member, a second sub-sealing member, and a third sub-sealing member, where the first sub-sealing member is disposed between the first flat surface and the first end wall, the second sub-sealing member is disposed between the second flat surface and the first sidewall, and the third sub-sealing member is disposed between the transition surface and the mating surface.

In the above solution, by configuring the second sealing member to include the first sub-sealing member, the second sub-sealing member, and the third sub-sealing member, and disposing the first sub-sealing member, the second sub-sealing member, and the third sub-sealing member respectively between the first flat surface and the first end wall, the second flat surface and the first sidewall, and the transition surface and the mating surface, the second sealing member can be in close contact with the surface where the third sidewall and the first housing are connected, improving the sealing performance between the first housing and the second housing, and thereby enabling the battery to have high reliability.

According to some embodiments of the present application, the battery further includes a first fastener, where the first fastener passes through the first sealing interface along the second direction and is locked into the interior of the second end wall.

In the above solution, by providing the first fastener that passes through the first sealing interface and is locked into the interior of the second end wall, the connection stability between the first housing and the second housing can be effectively improved, thereby enhancing the structural stability of the battery, and enabling the battery to have high reliability.

According to some embodiments of the present application, a portion of the first fastener locked into the second end wall is located on a side of the first surface away from the closed space.

In the above solution, by configuring the portion of the first fastener locked into the second end wall to be located on a side of the first surface away from the closed space, the first fastener does not occupy the closed space, thereby improving the utilization rate of the closed space and enhancing the volumetric energy density of the battery, while also reducing the risk of the first fastener interfering with the battery cell. In addition, the second end wall can provide a deeper lock-up depth for the first fastener, ensuring that the first fastener is securely locked up into the second end wall, improving the connection stability between the first housing and the second housing, and enabling the battery to have high reliability.

According to some embodiments of the present application, along a direction perpendicular to the first surface, a projection of the first fastener at least partially overlaps with a projection of the battery cell.

In the above solution, along a direction perpendicular to the first surface, the projection of the first fastener at least partially overlaps with the projection of the battery cell, which ensures that the second end wall provides a deeper lock-up depth for the first fastener, allowing the first fastener to be securely locked up into the second end wall, improving the connection stability between the first housing and the second housing, and enabling the battery to have high reliability.

According to some embodiments of the present application, the second housing further includes a third sidewall, where the third sidewall is disposed at an end of the second end wall in the first direction, and the battery further includes a second fastener, where the second fastener is configured to connect the third sidewall and the first housing, and the second fastener is locked into an interior of the third sidewall.

In the above solution, by disposing the third sidewall at the end of the second end wall in the first direction and connecting the third sidewall and the first housing through the second fastener, a stable connection relationship between the third sidewall and the first housing is achieved, thereby improving the connection stability between the first housing and the second housing, and thus enhancing the reliability of the battery.

According to some embodiments of the present application, a first sealing member is disposed between the first sealing surface and the second sealing surface, where along a width direction of the first sealing member, one end of the first sealing member is close to the closed space, the other end of the first sealing member is close to the exterior of the battery, and the width direction of the first sealing member is parallel to the first surface.

In the above solution, by configuring the width direction of the first sealing member to be parallel to the first surface, for example, the width direction of the first sealing member being parallel to the first direction, the thickness of the first sealing member in the second direction can be reduced while the first sealing member plays a good sealing role, thereby improving the space utilization rate of the battery in the second direction to accommodate more battery cells or reduce the volume of the battery, thus enhancing the volumetric energy density of the battery.

According to some embodiments of the present application, the second housing includes an enclosure frame, where along the first direction, the enclosure frame forms an opening, the first housing includes a plug plate, and the plug plate is at least partially inserted into the interior of the enclosure frame along the first direction to close the opening.

In the above solution, the second housing may include an enclosure frame, where the enclosure frame forms an opening at an end in the first direction, and the battery cell can be placed into the enclosure frame through the opening. The first housing may include a plug plate, where the plug plate can be inserted into the interior of the enclosure frame along the first direction to close the opening, thereby not occupying additional space in the second direction. That is, the maximum dimension of the outer contour of the battery can be the maximum dimension of the outer contour of the enclosure frame, so that the battery has a higher space utilization rate to accommodate more battery cells or achieves a smaller volume, enabling the battery to have high volumetric energy density.

According to some embodiments of the present application, the first housing further includes an extension wall plate, where at least a portion of the first sealing surface is disposed on the extension wall plate, the extension wall plate is disposed at an end of the plug plate in the second direction, and the plug plate has a cover surface facing the battery cell. Along the second direction, a projection of the extension wall plate is at least partially located on a side of the cover surface close to the battery cell.

In the above solution, by providing the extension wall plate, the area of the first sealing surface can be made as large as possible to effectively connect to the second sealing surface of the second housing, thereby improving the connection stability between the first housing and the second housing and enhancing the reliability of the battery. In addition, by configuring the projection of the extension wall plate along the second direction to be at least partially located on a side of the cover surface close to the battery cell, the extension wall plate is prevented from protruding outward and increasing the overall dimension of the battery in the first direction, thereby improving the space utilization rate of the battery in the first direction to accommodate more battery cells or allow the battery to achieve a smaller volume, enabling the battery to have high volumetric energy density.

According to some embodiments of the present application, along the second direction, the projection of the first sealing member is at least partially located on a side of the cover surface close to the battery cell.

In the above solution, by configuring the projection of the first sealing member along the second direction to be at least partially located on a side of the cover surface close to the battery cell, the sealing performance between the extension wall plate and the second housing can be improved.

According to some embodiments of the present application, along the second direction, the projection of the first sealing member at least partially overlaps with the projection of the battery cell.

In the above solution, by configuring the projection of the first sealing member along the second direction to at least partially overlap with the projection of the battery cell, the first sealing member can avoid occupying space in the first direction as much as possible, thereby improving the space utilization rate of the battery in the first direction to accommodate more battery cells or allow the battery to achieve a smaller volume, enabling the battery to have high volumetric energy density.

According to some embodiments of the present application, the second sealing surface is disposed on an inner wall surface of the enclosure frame, and at least a portion of the first sealing surface is disposed on an outer wall surface of the plug plate.

In the above solution, the outer wall surface of the plug plate can be provided with the first sealing surface to connect to the inner wall surface of the enclosure frame, eliminating the need for additional connecting walls, simplifying the processing of the housing, and reducing processing costs.

According to some embodiments of the present application, the battery further includes a first connecting member, where the first connecting member passes through the first sealing interface along the second direction and is locked into the plug plate.

In the above solution, by providing the first connecting member to connect the plug plate and the enclosure frame, the connection stability between the plug plate and the enclosure frame can be improved, thereby enhancing the structural stability of the battery, and enabling the battery to have high reliability.

According to some embodiments of the present application, along the first direction, a projection of the first connecting member at least partially overlaps with the projection of the battery cell.

In the above solution, along the first direction, the projection of the first connecting member at least partially overlaps with the projection of the battery cell, which ensures that the plug plate provides a deeper lock-up depth for the first connecting member, allowing the first connecting member to be securely locked up into the plug plate, improving the connection stability between the plug plate and the second housing, and enabling the battery to have high reliability.

According to some embodiments of the present application, the battery includes at least one battery module, where the battery module includes a plurality of battery cells arranged in a group, and the battery module is provided with a strapping member configured to bind the plurality of battery cells arranged in a group.

In the above solution, the plurality of battery cells arranged in a group in the battery module are bound by the strapping member to be orderly arranged in the closed space, improving the utilization rate of the closed space and thus enhancing the energy density of the battery.

According to some embodiments of the present application, the battery module includes a first battery module and a second battery module arranged adjacent to each other along the second direction. The first battery module is provided with a first strapping member, and the second battery module is provided with a second strapping member. Along the second direction, a first portion of the first strapping member is disposed on a side of the first battery module facing the second battery module, and a second portion of the second strapping member is disposed on a side of the second battery module facing the first battery module. Along the second direction, a projection of the first portion and a projection of the second portion are offset, and along a direction perpendicular to the first surface, the projection of the first portion and the projection of the second portion at least partially overlap.

In the above solution, by configuring the projection of the first portion and the projection of the second portion along the second direction to be offset and the projection of the first portion and the projection of the second portion along the first direction to at least partially overlap, the space occupied by the strapping member in the second direction can be effectively reduced, improving the utilization rate of the closed space by a plurality of battery modules and thus enhancing the volumetric energy density of the battery.

According to some embodiments of the present application, the battery modules are provided in plurality. The strapping member includes an outer frame and a partition strip, where the partition strip is disposed inside the outer frame and divides the interior of the outer frame into a plurality of subspaces, with each of the battery modules respectively disposed in the subspace.

In the above solution, the strapping member includes the outer frame and the partition strip, where the partition strip divides the casing into multiple subspaces, enabling a single strapping member to simultaneously bind a plurality of battery modules, thereby reducing the space occupied by the strapping member in the closed space, allowing the closed space to accommodate more battery cells, and enabling the battery to have high volumetric energy density.

According to some embodiments of the present application, the battery modules are provided in plurality, where the plurality of battery modules are arranged along the second direction. The battery further includes an end plate, where the end plate is connected to end faces of the plurality of battery modules in the first direction, and the strapping member is connected to the end plate.

In the above solution, the plurality of battery modules are arranged along the second direction, with an end plate disposed at one end of the plurality of battery modules in the first direction. By connecting the strapping member to the end plate, the plurality of battery modules can be effectively integrated into a compact arrangement, improving the utilization rate of the closed space, and enabling the battery to have high volumetric energy density.

According to some embodiments of the present application, the second housing includes a second end wall and a second sidewall, where the first surface is located on the second end wall, the first sealing surface is located on the second sidewall, and the second sidewall is connected to an end of the second end wall in the second direction. The battery module includes a side battery module arranged adjacent to the second sidewall in the second direction, and the strapping member includes a side portion, where the side portion is disposed on a side of the side battery module facing the second sidewall in the second direction, and the second sidewall is located on a side of the side portion close to the first surface.

In the above solution, the side battery module is arranged adjacent to the second sidewall. In a direction perpendicular to the first surface, the side battery module can be constrained by both the strapping member and the second sidewall, ensuring that the side battery module is stably disposed in the closed space. The second sidewall is located on a side of the side portion close to the first surface, which can also be understood as that the second sidewall having a dimension in the direction perpendicular to the first surface can be made as small as possible while ensuring that the side battery module is stably disposed in the closed space under the constraint of the strapping member.

According to some embodiments of the present application, along the second direction, the side portion and the second sidewall are offset, and along a direction perpendicular to the first surface, a projection of the side portion and a projection of the second sidewall at least partially overlap.

In the above solution, by configuring a projection of the side portion and a projection of the second sidewall along the second direction to be offset and the projection of the side portion and the projection of the second sidewall along a direction perpendicular to the first surface to at least partially overlap, the space occupied by the strapping member in the second direction can be effectively reduced, improving the utilization rate of the closed space by the plurality of battery modules and thus enhancing the volumetric energy density of the battery.

According to some embodiments of the present application, the second housing includes a second end wall, where the first surface is located on the second end wall, the battery further includes a plurality of mounting portions, and the plurality of mounting portions are all located on a surface of the second end wall facing away from the first surface.

In the above solution, the second end wall is provided with a plurality of mounting portions to enable the battery to be stably mounted on the body of an electric apparatus, providing stable electrical energy to the electric apparatus.

According to some embodiments of the present application, along a direction perpendicular to the first surface, the projections of the plurality of mounting portions are entirely within the projection range of the first surface.

In the above solution, by configuring the projections of the mounting portions along a direction perpendicular to the first surface to be entirely within the projection range of the first surface, the mounting portions do not occupy space outside the first surface, resulting in the battery having a compact structure with high volumetric energy density.

According to some embodiments of the present application, the battery cell is a blade battery cell.

In the above solution, by configuring the battery cells in the battery as blade battery cells, the volumetric energy density of the battery can be effectively enhanced.

According to a second aspect, the present application further provides an electric apparatus, where the electric apparatus includes a body and a battery according to any one of the first aspect, and the battery is configured to provide electrical energy to the body.

In the above solution, the electric apparatus employs the battery provided above with a higher energy density, resulting in longer endurance and meeting more electrical energy demands.

According to some embodiments of the present application, the first sealing surface and the second sealing surface are parallel to the first direction, and the first sealing surface and the second sealing surface intersect with the second direction, where the first direction and the second direction are both parallel to the first surface.

In the above solution, by configuring the first sealing interface to intersect with the second direction, where the second direction is parallel to the first surface, the space occupied by the first sealing interface in the second direction can be reduced while maintaining good sealing performance between the first sealing surface and the second sealing surface, thereby improving the space utilization rate of the battery in the second direction to accommodate more battery cells or reduce the volume of the battery, thus enhancing the volumetric energy density of the battery. For example, configuring the second sealing interface to intersect with the second direction enables a sealed connection between the first housing and the second housing without requiring a flange structure protruding along the second direction, thereby improving the space utilization rate of the battery in the second direction to accommodate more battery cells or reduce the volume of the battery, and thus enhancing the volumetric energy density of the battery.

According to some embodiments of the present application, the body includes a truck frame, where the truck frame includes a cab, a cargo compartment, and a battery rack located between the cab and the cargo compartment, the battery rack is configured to hold the battery, and the second direction is the direction from the cab toward the cargo compartment.

In the above solution, the second direction is the direction from the cab toward the cargo compartment. Thus, the electric apparatus employs the battery provided above, effectively utilizing the space between the cab and the cargo compartment. By configuring the first sealing interface on the battery to intersect with the first surface, the overall space occupied by the battery in the second direction can be reduced without compromising the sealing performance of the battery, allowing the cargo compartment to occupy more space in the second direction to carry more cargo. Alternatively, the space saved in the second direction can be used to enhance the own endurance capability of the battery.

According to some embodiments of the present application, the body includes a tractor unit, where the tractor unit includes a cab, a fifth wheel, and a battery rack located between the cab and the fifth wheel, the battery rack is configured to hold the battery, and the second direction is the direction from the cab toward the fifth wheel.

In the above solution, the second direction is the direction from the cab toward the fifth wheel. Thus, the electric apparatus employs the battery provided above, effectively utilizing the space between the cab and the fifth wheel. By configuring the first sealing interface on the battery to intersect with the first surface, the overall space occupied by the battery in the second direction can be reduced without compromising the sealing performance of the battery, allowing the fifth wheel to be positioned closer to the cab, thereby utilizing more space of the vehicle frame in the second direction for mounting a cargo compartment to carry more cargo. Alternatively, the space saved in the second direction can be used to enhance the own endurance capability of the battery.

According to some embodiments of the present application, the body includes a vehicle frame, where the vehicle frame includes a vehicle frame beam, and along a width direction of the vehicle frame, the battery is mounted on at least one side of the vehicle frame beam, and the second direction is the width direction of the vehicle frame beam.

In the above solution, the second direction is the width direction of the vehicle frame beam. Thus, the electric apparatus employs the battery provided above, effectively utilizing the space in the width direction of the vehicle frame beam. By configuring the first sealing interface on the battery to intersect with the first surface, the overall space occupied by the battery in the second direction can be reduced without compromising the sealing performance of the battery. When the arrangement space of the battery in the width direction of the vehicle frame beam is limited, the space saved by the above configuration of the first sealing interface can be used to enhance the own endurance capability of the battery.

The above description is only an overview of the technical solutions of the present application. To facilitate a clearer understanding of the technical means of the present application, the content of the specification can be implemented, and to make the above and other objectives, features, and advantages of the present application more apparent and understandable, specific embodiments of the present application are provided below.

### BRIEF DESCRIPTION OF DRAWINGS

To more clearly illustrate the technical solutions of the embodiments of the present application, the drawings required for use in the embodiments are briefly described below. It should be understood that the following drawings only show certain embodiments of the present application and should not be regarded as limiting the scope. For those skilled in the art, other related drawings can be obtained based on these drawings without creative effort.
FIG. 1 is a schematic diagram of a vehicle according to some embodiments of the present application.
FIG. 2 is a perspective view of a battery according to some embodiments of the present application.
FIG. 3 is an exploded perspective view of a partial structure of a battery according to some embodiments of the present application.
FIG. 4 is a schematic diagram of a battery cell, a first surface, a first sealing surface, a second sealing surface, and a first sealing interface according to some embodiments of the present application.
FIG. 5 is a schematic diagram of a battery cell, a first surface, a first sealing surface, a second sealing surface, and a first sealing interface according to some embodiments of the present application.
FIG. 6 is a schematic diagram of a battery cell, a first surface, a first sealing surface, a second sealing surface, and a first sealing member according to some embodiments of the present application.
FIG. 7 is a perspective view of a second housing according to some embodiments of the present application.
FIG. 8 is an enlarged view of position A in FIG. 7.
FIG. 9 is a schematic diagram of a second end wall, a first sealing member, and a first sealing surface according to some embodiments of the present application.
FIG. 10 is a perspective view of a first housing according to some embodiments of the present application.
FIG. 11 is a perspective view of a battery according to certain other embodiments of the present application.
FIG. 12 is a schematic diagram of a partial structure of a second housing according to some embodiments of the present application.
FIG. 13 is a schematic diagram of a partial structure of a first housing according to some embodiments of the present application.
FIG. 14 is a schematic diagram of a partial structure of a second sealing member according to some embodiments of the present application.
FIG. 15 is a schematic diagram of a partial structure of a first housing according to certain other embodiments of the present application.
FIG. 16 is a schematic diagram of a partial structure of a second housing according to certain other embodiments of the present application.
FIG. 17 is a schematic diagram of a second housing according to some other embodiments of the present application.
FIG. 18 is a schematic diagram of a first fastener and a first surface according to certain other embodiments of the present application.
FIG. 19 is a schematic diagram of a specific structure of a battery according to certain other embodiments of the present application.
FIG. 20 is a schematic diagram of a first housing according to certain other embodiments of the present application.
FIG. 21 is a schematic diagram of a battery module according to some embodiments of the present application.
FIG. 22 is a schematic diagram of a first battery module and a second battery module according to some embodiments of the present application.
FIG. 23 is a schematic diagram of a strapping member and a battery module according to certain other embodiments of the present application.
FIG. 24 is a schematic diagram of a battery module and a second sidewall according to some embodiments of the present application.
FIG. 25 is a schematic diagram of an electric apparatus according to some embodiments of the present application.
FIG. 26 is a schematic diagram of an electric apparatus according to some embodiments of the present application.
FIG. 27 is a schematic diagram of an electric apparatus according to some embodiments of the present application.
FIG. 28 is a schematic diagram of a vehicle frame beam and a battery according to some embodiments of the present application.

Reference signs: 100. battery; 101. battery cell; 102. closed space; 103. first sealing interface; 10. first housing; 11. first sealing surface; 12. first end wall; 120. first end wall surface; 13. first sidewall; 14. fourth sidewall; 15. plug plate; 16. extension wall plate; 17. connection portion; 170. mating surface; 20. second housing; 21. first surface; 22. second sealing surface; 23. second end wall; 24. second sidewall; 25. third sidewall; 250. first flat surface; 251. second flat surface; 252. transition surface; 2520. sloped surface; 2521. curved surface; 26. enclosure frame; 30. first sealing member; 40. second sealing member; 41. first sub-sealing member; 42. second sub-sealing member; 43. third sub-sealing member; 50. first fastener; 51. second fastener; 52. first connecting member; 60. battery module; 61. first battery module; 62. second battery module; 63. side battery module; 70. strapping member; 71. first strapping member; 710. first portion; 72. second strapping member; 720. second portion; 73. outer frame; 74. partition strip; 75. side portion; 80. end plate; 90. mounting portion; 91. cross beam; x. first direction; y. second direction; z. third direction; 1000. vehicle; 200. controller; 300. motor; 1001. body; 1002. cab; 1003. cargo compartment; 1004. battery rack; 1005. fifth wheel; 1006. vehicle frame beam; and 1007. longitudinal beam.

### DESCRIPTION OF EMBODIMENTS

To make the objectives, technical solutions, and advantages of the embodiments of the present application clearer, the technical solutions in the embodiments of the present application are clearly described below with reference to the drawings in the embodiments of the present application. The described embodiments are a part of the embodiments of the present application, not all embodiments. Based on the embodiments in the present application, all other embodiments obtained by those skilled in the art without creative effort fall within the protection scope of the present application.

Unless otherwise defined, all technical and scientific terms used in the present application have the same meaning as commonly understood by those skilled in the technical field of the present application. The terms used in the specification of the present application are solely for the purpose of describing specific embodiments and are not intended to limit the present application. The terms "include" and "have" in the specification, claims, and the above drawings of the present application, as well as any variations thereof, are intended to cover non-exclusive inclusion. The terms "first," "second," and the like in the specification, claims, or the above drawings of the present application are used to distinguish different objects, not to describe a specific order or hierarchical relationship, nor to limit quantity.

Reference to "embodiment" in the present application means that a specific feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments.

In the description of the present application, it should be noted that, unless otherwise specified and explicitly defined, the terms "mount," "connect," "join," and "attach" should be understood in their general senses. For example, they may refer to a fixed connection, a detachable connection, or an integral connection; a direct connection, an indirect connection via an intermediate medium, or an internal communication between two elements. For those skilled in the art, the specific meanings of the above terms in the present application can be understood based on specific circumstances.

The term "and/or" in the present application is merely an association relationship describing associated objects, indicating that three relationships may exist. For example, A and/or B may indicate: A exists alone, A and B exist simultaneously, and B exists alone. Additionally, the character "/" in the present application generally indicates an "or" relationship between the contextually associated objects.

In the embodiments of the present application, the same reference signs denote the same components. For brevity, detailed descriptions of the same components are not repeated in different embodiments. It should be understood that the thickness, length, width, and other dimensions of various components in the embodiments of the present application shown in the drawings, as well as the overall thickness, length, width, and other dimensions of an integrated device, are for illustrative purposes only and should not constitute any limitation to the present application.

The term "plurality" in the present application refers to two or more (including two).

In the embodiments of the present application, the battery cell may be a secondary battery, where the secondary battery refers to a battery cell that can be recharged to activate active materials for continuous use after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery. This is not limited in the embodiments of the present application.

The battery cell may include an electrode assembly. The electrode assembly may include a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent a short circuit between the positive electrode and the negative electrode and to allow the active ions to pass through.

In some embodiments, the electrode assembly is a wound structure. The positive electrode plate and the negative electrode plate are wound into a wound structure.

In some embodiments, the shape of the electrode assembly may be cylindrical.

In some embodiments, the electrode assembly is provided with tabs, where the tabs can conduct current from the electrode assembly. The tabs include a positive tab and a negative tab.

In some embodiments, the battery cell may include a casing. The casing is configured to encapsulate the electrode assembly, the electrolyte, and other components. The casing may be a steel casing, an aluminum casing, a plastic casing (for example, polypropylene), a composite metal casing (for example, a copper-aluminum composite casing), an aluminum-plastic film, or the like.

As an example, the battery cell may be a cylindrical battery cell, a prismatic battery cell, a pouch battery cell, or a battery cell of other shapes.

The battery mentioned in the embodiments of the present application refers to a single physical module including one or more battery cells to provide higher voltage and capacity.

In some embodiments, the battery may be a battery module, and when there are a plurality of battery cells, the plurality of battery cells are arranged and fastened to form a battery module.

In some embodiments, the battery may be a battery pack, where the battery pack includes a housing and a battery cell, and the battery cell or battery module is accommodated in the housing. The housing may include a first housing and a second housing, where the first housing and the second housing are connected to jointly define a closed space. The second housing has a first surface, where the first surface is configured to support the battery cell, and the battery cell is disposed in the closed space to prevent liquids or other foreign objects from affecting the charging or discharging of the battery cell.

In some embodiments, the housing may be used as part of the chassis structure of a vehicle. For example, part of the housing may become at least part of the chassis of a vehicle, or part of the housing may become at least parts of a cross beam and longitudinal beam of a vehicle.

In some embodiments, the battery may be an energy storage apparatus. The energy storage apparatus includes an energy storage container, an energy storage electric cabinet, and the like.

In the development of battery technology, how to improve the energy density of batteries is a technical problem that urgently needs to be addressed. The inventor has found that, currently, the edges of both the first housing and the second housing of a battery are provided with flange structures protruding outward from the battery (typically protruding in a direction parallel to the first surface). A sealing interface is formed between the flange structures to achieve a sealed connection between the first housing and the second housing. However, the protruding flange structures occupy space in the direction parallel to the first surface, resulting in low space utilization rate of the battery and affecting the volumetric energy density of the battery.

In view of this, to address the issue of low space utilization rate and reduced energy density of the battery due to the additional space occupied by protruding flange structures, some embodiments of the present application provide a battery, where the battery includes a battery cell, a first housing, and a second housing. The first housing and the second housing jointly define a closed space for accommodating the battery cell, and the first sealing interface formed by the connection of the first housing and the second housing intersects with the first surface configured to support the battery cell.

In the above solution, by configuring the first sealing interface to intersect with the first surface, that is, the first sealing interface is not parallel to the first surface, the projected area of the first sealing member onto the first surface can be reduced, and the space occupied by the first sealing interface in a direction parallel to the first surface can be reduced, thereby improving the space utilization rate of the battery in the direction parallel to the first surface to accommodate more battery cells or reduce the volume of the battery, thus enhancing the volumetric energy density of the battery.

The battery disclosed in the embodiments of the present application may be used, without limitation, in battery cabinets, container-type energy storage devices, and the like. The energy storage device may include a plurality of batteries disclosed in the present application.

The battery disclosed in the embodiments of the present application may be used, without limitation, in electric apparatuses such as vehicles, ships, or aircraft. A power supply system for the electric apparatus can be composed of the battery disclosed in the present application.

The embodiments of the present application provide an electric apparatus using a battery as a power source, where the electric apparatus may include but is not limited to a mobile phone, a tablet computer, a laptop computer, an electric toy, an electric tool, an electric bicycle, an electric motorcycle, an electric vehicle, a ship, a heavy truck, a bus, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the following embodiments use the electric apparatus according to an embodiment of this application being a vehicle 1000 as an example for description.

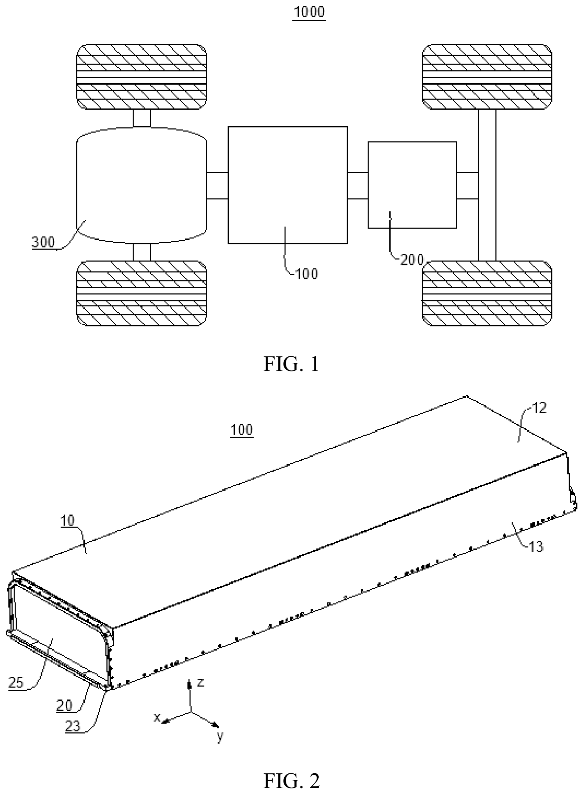

Referring to FIG. 1, FIG. 1 is a schematic diagram of a vehicle according to some embodiments of the present application. The vehicle 1000 may be a fuel vehicle, a gas vehicle, or a new energy vehicle, where the new energy vehicle may be a pure electric vehicle, a hybrid vehicle, or an extended-range vehicle. The type of the vehicle 1000 may be a sedan, an SUV, a heavy truck, or a bus. A battery 100 is disposed inside the vehicle 1000, where the battery 100 may be disposed at the bottom, front, or rear of the vehicle 1000. The battery 100 may be used to supply power to the vehicle 1000, for example, the battery 100 may serve as an operational power source for the vehicle 1000, used for the circuit system of the vehicle 1000, such as for the starting, navigation, and operational power demands during driving of the vehicle 1000.

The vehicle 1000 may further include a controller 200 and a motor 300, where the controller 200 is configured to control the battery 100 to supply power to the motor 300, for example, for the power demands during starting, navigation, and driving of the vehicle 1000.

In some embodiments of the present application, the battery 100 may serve not only as an operational power source for the vehicle 1000 but also as a driving power source for the vehicle 1000, replacing or partially replacing fossil fuel or natural gas to provide driving traction for the vehicle 1000.

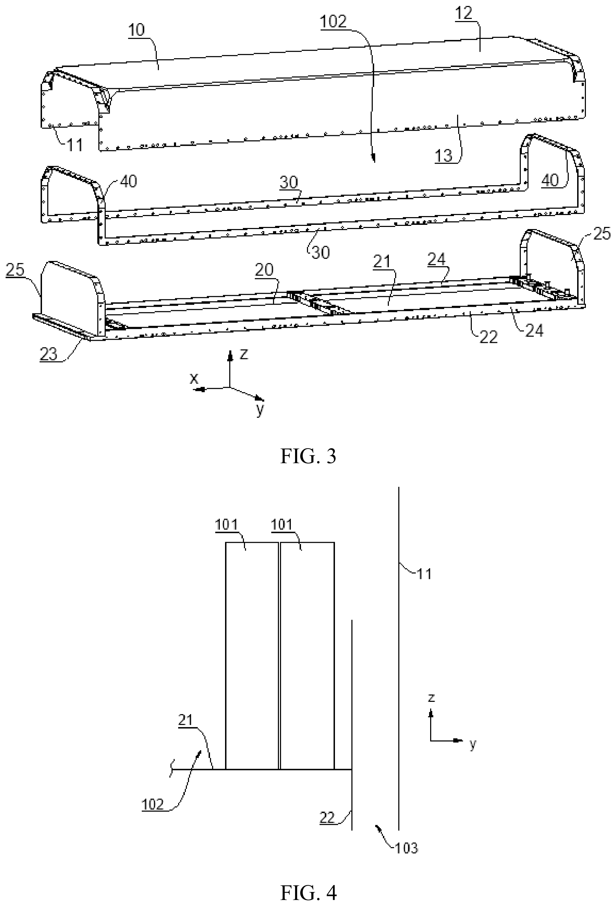

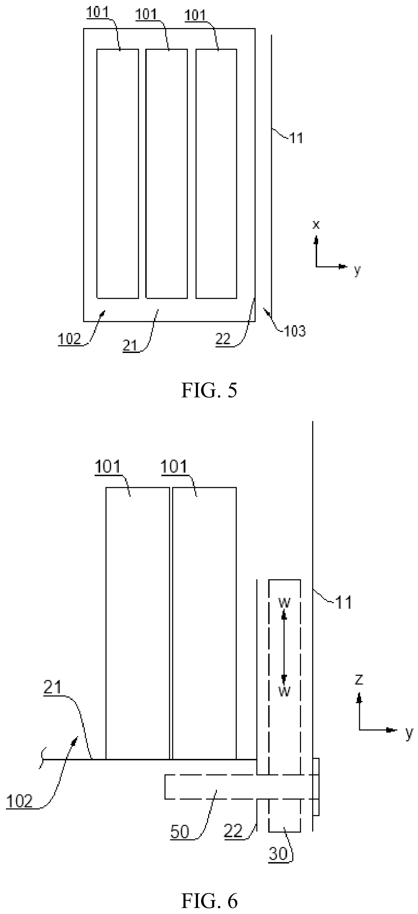

According to some embodiments of the present application, a battery 100 is provided. Referring to FIG. 2 to FIG. 5, FIG. 2 is a perspective view of a battery 100 according to some embodiments of the present application, FIG. 3 is an exploded perspective view of a partial structure of a battery 100 according to some embodiments of the present application, FIG. 4 is a schematic diagram of a battery cell 101, a first surface 21, a first sealing surface 11, a second sealing surface 22, and a first sealing interface 103 according to some embodiments of the present application, and FIG. 5 is a schematic diagram of a battery cell 101, a first surface 21, a first sealing surface 11, a second sealing surface 22, and a first sealing interface 103 according to some embodiments of the present application.

The battery 100 includes a battery cell 101, a first housing 10, and a second housing 20. The first housing 10 includes a first sealing surface 11. The second housing 20 includes a first surface 21 and a second sealing surface 22, where the first surface 21 is configured to support the battery cell 101, the first housing 10 and the second housing 20 jointly define a closed space 102 for accommodating the battery cell 101, and the first sealing surface 11 cooperates with the second sealing surface 22 to form a first sealing interface 103 for sealing the closed space 102. The first sealing interface 103 intersects with the first surface 21.

The battery 100 may include the first housing 10 and the second housing 20, where the first housing 10 and the second housing 20 are connected to each other (for example, the first housing 10 and the second housing 20 are fitted together), and the first housing 10 and the second housing 20 together define the closed space 102 for accommodating the battery cell 101.

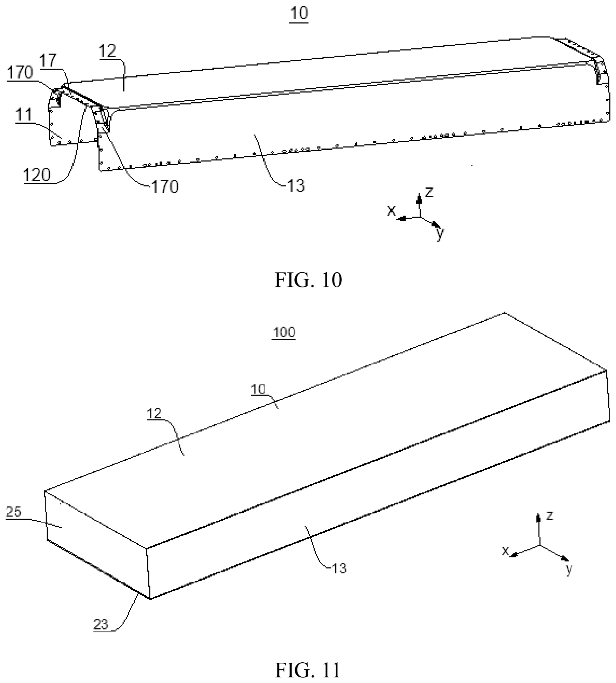

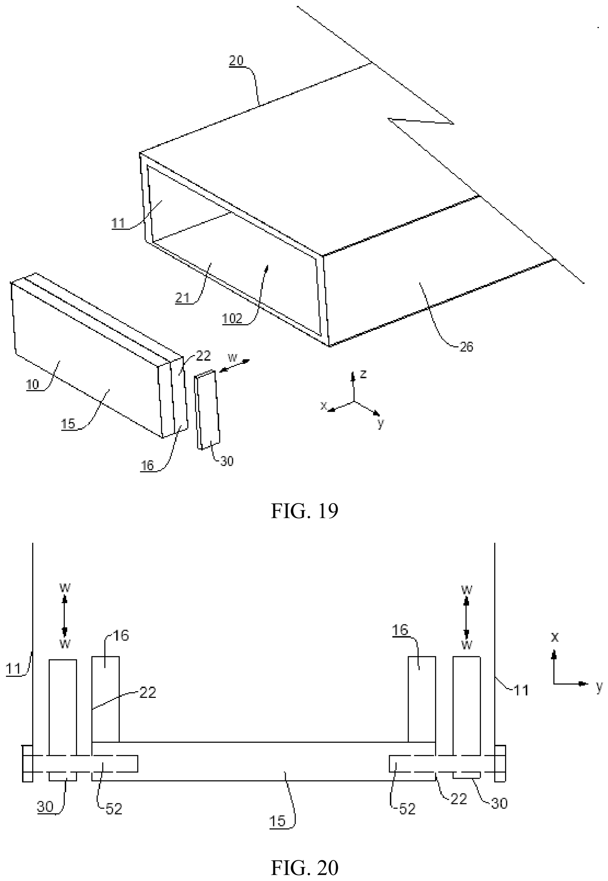

Optionally, the first housing 10 and the second housing 20 may both be hollow structures open on one side, where the open side of the first housing 10 and the open side of the second housing 20 cooperate to enable the first housing 10 and the second housing 20 to together define the closed space 102 (see FIG. 3). Optionally, the first housing 10 may be a hollow structure open at one end, and the second housing 20 may be a plate-like structure, where the second housing 20 is disposed at the open side of the first housing 10 to enable the first housing 10 and the second housing 20 to together define the closed space 102 (see FIG. 11). Optionally, the second housing 20 may be a hollow structure open at one end, and the first housing 10 may be a plate-like structure, where the first housing 10 is disposed at the open side of the second housing 20 to enable the first housing 10 and the second housing 20 to together define the closed space 102 (see FIG. 19).

Of course, the housing formed by the first housing 10 and the second housing 20 may have various shapes, such as a cuboid or a cylinder. For example, as shown in FIG. 2, the housing is a cuboid structure.

Optionally, one or more battery cell 101 may be disposed in the closed space 102. For example, the battery 100 is provided with a plurality of battery cells 101, where the plurality of battery cells 101 may be connected in series, in parallel, or in a mixed configuration, where the mixed configuration refers to a combination of series and parallel connections among the plurality of battery cells 101. The plurality of battery cells 101 may be directly connected in series, in parallel, or in a mixed configuration and then accommodated as a whole in the closed space 102. Alternatively, the battery 100 may include a plurality of battery cells 101 first connected in series, in parallel, or in a mixed configuration to form a battery module, and a plurality of battery modules are then connected in series, in parallel, or in a mixed configuration to form a whole, which is accommodated in the closed space 102.

In some embodiments, the second housing 20 can be regarded as the main structure for supporting the battery cell 101. For example, in some embodiments, the second housing 20 may be used as the lower housing of the battery 100, where the first surface 21 in the second housing 20 is the surface that supports the battery cell 101, and the battery cell 101 may be placed on the first surface 21. In some embodiments, the first housing 10 can be regarded as a component that cooperates with the second housing 20 to jointly define the closed space 102 with the second housing 20. For example, in some embodiments, the first housing 10 can be regarded as the upper housing of the battery 100. In some embodiments, the first housing 10 and the second housing 20 may be made of different materials or a same material. In some embodiments, the first housing 10 and the second housing 20 may be made of aluminum, aluminum alloy, stainless steel, plastic, or the like, respectively. When the second housing 20 is used as the main structure for supporting the battery cell 101, the second housing 20 may be made of a material with high structural strength, such as aluminum alloy, steel, or other materials with high structural strength, while the first housing 10 may be made of a material with lower density, such as plastic, to minimize the impact of the mass of the first housing 10 on the gravimetric energy density of the battery 100.

The first sealing surface 11 is the surface of the first housing 10 configured for sealing connection with the second sealing surface 22 of the second housing 20, and the second sealing surface 22 is the surface of the second housing 20 configured for sealing connection with the first sealing surface 11 of the first housing 10. In some embodiments, the sealing engagement between the first sealing surface 11 and the second sealing surface 22 serves to seal the closed space 102, reducing interference from external substances on the battery cell 101 within the closed space 102.

In some embodiments, the first sealing surface 11 and the second sealing surface 22 may be connected by welding, bonding, or using other connecting members (such as threaded members).

In some embodiments, the first sealing interface 103 can be understood as the interface where the first sealing surface 11 and the second sealing surface 22 overlap each other in the arrangement direction of the first sealing surface 11 and the second sealing surface 22. Alternatively, the first sealing interface 103 can be understood as an interface formed between the first sealing surface 11 and the second sealing surface 22 that achieves effective sealing. Alternatively, the first sealing interface 103 can be understood as an interface that is formed between the first sealing surface 11 and the second sealing surface 22 and provided with a sealing member, sealing gasket, or sealant capable of achieving effective sealing between the first sealing surface 11 and the second sealing surface 22.

Referring to FIG. 4 and FIG. 5, the first sealing interface 103 can be regarded as the interface formed by the connection of the first sealing surface 11 and the second sealing surface 22, located between the first sealing surface 11 and the second sealing surface 22, and serving a sealing function.

"The first sealing interface 103 intersects with the first surface 21" can be understood as the plane in which the first sealing interface 103 lies being perpendicular or inclined to the plane in which the first surface 21 lies, that is, the plane in which the first sealing interface 103 lies and the plane in which the first surface 21 lies are not the same plane or parallel. In some embodiments, the first sealing interface 103 may be perpendicular to the first surface 21. For example, in FIG. 4, the first surface 21 can be regarded as a horizontal plane, and the first sealing interface 103 can be a vertical plane. In certain other embodiments, the first sealing interface 103 may be inclined relative to the first surface 21. For example, when the first surface 21 is a horizontal plane, the first sealing interface 103 is an inclined plane, where an angle between the inclined plane and the horizontal plane may be greater than zero degrees and less than ninety degrees.

Referring to FIG. 2 and FIG. 3, the first housing 10 may include a first end wall 12 and a first sidewall 13, and the second housing 20 may include a second end wall 23, where the first end wall 12 and the second end wall 23 are disposed opposite each other in a third direction z, the second end wall 23 is formed with the first surface 21, and the first surface 21 is disposed perpendicular to the third direction z. The first sidewall 13 may extend along the third direction z, the first sidewall 13 is formed with the first sealing surface 11 parallel to the third direction z, the second housing 20 is formed with the second sealing surface 22 parallel to the third direction z, the first sealing surface 11 and the second sealing surface 22 are connected to each other, and the first sealing interface 103 formed by the two is parallel to the third direction z, that is, perpendicular to the plane in which the first surface 21 lies.

In the above solution, by configuring the first sealing interface 103 to intersect with the first surface 21, that is, the first sealing interface 103 is not parallel to the first surface 21, the projected area of the first sealing interface onto the first surface can be reduced, and the space occupied by the first sealing interface 103 in a direction parallel to the first surface 21 can be reduced, thereby improving the space utilization rate of the battery 100 in the direction parallel to the first surface 21 to accommodate more battery cells 101 or reduce the volume of the battery 100, thus enhancing the volumetric energy density of the battery 100.

According to some embodiments of the present application, the first sealing surface 11 and the second sealing surface 22 are parallel to the first direction x, and the first sealing surface 11 and the second sealing surface 22 intersect with the second direction y, where the first direction x and the second direction y are both parallel to the first surface 21.

"The first sealing surface 11 and the second sealing surface 22 are parallel to the first direction x" can be understood as the first direction x not passing through the first sealing surface 11 and the second sealing surface 22. It can also be understood as the first sealing surface 11 and the second sealing surface 22 being arranged along the first direction x, so that the first sealing surface 11 and the second sealing surface 22 can be disposed opposite each other along the first direction x, thereby forming the first sealing interface 103.

The second direction y may be a direction intersecting with the first direction x. "The first sealing surface 11 and the second sealing surface 22 intersect with the second direction y" can be understood as the second direction y being able to pass through the first sealing surface 11 and the second sealing surface 22, or as the second direction y intersecting with the first sealing interface 103, that is, the second direction y passing through the first sealing interface 103. In some embodiments, the first sealing surface 11 and the second sealing surface 22 may be perpendicular to the second direction y. In some embodiments, the first sealing interface 103 may be perpendicular to the second direction y.

The first direction x and the second direction y are directions parallel to the first surface 21, and the first direction x and the second direction y can be understood as directions not passing through the first surface 21. For example, in some embodiments, the first surface 21 may be rectangular, the first direction x may be parallel to the length direction or width direction of the rectangular surface, and the second direction y may be parallel to the width direction or length direction of the rectangular surface. In some embodiments, the first direction x may be parallel to the length direction of the rectangular first surface 21, the second direction y may be parallel to the width direction of the first surface 21, the first sealing surface 11 and the second sealing surface 22 may be located on one side of the first surface 21 in the width direction, and the first sealing surface 11 and the second sealing surface 22 are arranged in the width direction, with the first sealing interface 103 formed between the first sealing surface 11 and the second sealing surface 22.

In current batteries 100 with protruding flange structures, the flange structures may protrude along the second direction y, that is, the sealing interface between the flange structures is parallel to the second direction y. In the above solution, by configuring the first sealing interface 103 to intersect with the second direction y, the space occupied by the first sealing interface 103 in the second direction y can be reduced, thereby improving the space utilization rate of the battery 100 in the second direction y to accommodate more battery cells 101 or reduce the volume of the battery 100, thus enhancing the volumetric energy density of the battery 100. For example, configuring the first sealing interface 103 to be perpendicular to the second direction y can improve the space utilization rate of battery 100 in the second direction y to accommodate more battery cells 101 or reduce the volume of the battery 100, thus enhancing the volumetric energy density of the battery 100.

According to some embodiments of the present application, referring to FIG. 3 and FIG. 6, FIG. 6 is a schematic diagram of a battery cell 101, a first surface 21, a first sealing surface 11, a second sealing surface 22, and a first sealing member 30 according to some embodiments of the present application.

A first sealing member 30 is disposed between the first sealing surface 11 and the second sealing surface 22, where the first sealing member 30 is located on a side, closer to the closed space 102, of one of the first sealing surface 11 and the second sealing surface 22 that is farther from the closed space 102.

The first sealing member 30 may be a component with sealing properties disposed between the first sealing surface 11 and the second sealing surface 22. In some embodiments, the first sealing member 30 may be a sealant or a sealing gasket, where the first sealing member 30 is clamped between the first sealing surface 11 and the second sealing surface 22.

In some embodiments, the first sealing member 30 may be a flat, plate-like component, where the first sealing surface 11 and the second sealing surface 22 are both closely attached to the first sealing member 30, causing the first sealing member 30 to deform to fill uneven gaps between the first sealing surface 11 and the second sealing surface 22 of the first housing 10 and the second housing 20, thereby forming an effective seal between the first sealing surface 11 and the second sealing surface 22.

In some embodiments, the first sealing member 30 may be connected to the first housing 10 and the second housing 20 via abutment, crimping, bonding, or a connecting method using other connecting members (such as threaded members). For example, the first housing 10 and the second housing 20 are snap-fitted, and the first sealing surface 11 and the second sealing surface 22 are pressed or abutted against each other under the elasticity of the materials of the first housing 10 and the second housing 20, enabling the first sealing member 30 to be clamped between the first sealing surface 11 and the second sealing surface 22. For example, the first housing 10 and the second housing 20 are connected by bolts, where the bolts pass through the first sealing surface 11, the first sealing member 30, and the second sealing surface 22, enabling the first sealing member 30 to be clamped between the first sealing surface 11 and the second sealing surface 22.

"The first sealing member 30 is located on a side, closer to the closed space 102, of one of the first sealing surface 11 and the second sealing surface 22 that is farther from the closed space 102" can be understood as the arrangement of the first sealing surface 11, the second sealing surface 22, and the second sealing surface 22 not being perpendicular to the first surface 21. In some embodiments, along the second direction y, the first sealing surface 11, the first sealing member 30, and the second sealing surface 22 may be arranged sequentially, where the first sealing surface 11 is closer to the closed space 102 than the first sealing member 30 and the second sealing surface 22. In certain other embodiments, along the second direction y, the second sealing surface 22, the first sealing member 30, and the first sealing surface 11 may be arranged sequentially, where the second sealing surface 22 is closer to the closed space 102 than the second sealing member 40 and the second sealing surface 22.

In the above solution, by disposing the first sealing member 30 between the first sealing surface 11 and the second sealing surface 22, the sealing performance between the first sealing surface 11 and the second sealing surface 22 can be effectively improved, reducing the risk of external substances entering the closed space 102 and causing damage to the battery cell 101, and thus enhancing the reliability of the battery 100.

According to some embodiments of the present application, along a width direction of the first sealing member 30 (the width direction of the first sealing member 30 is indicated by the reference sign w in the figure), one end of the first sealing member 30 is close to the closed space 102, the other end of the first sealing member 30 is close to the exterior of the battery 100, and the width direction of the first sealing member 30 intersects with the first surface 21.

The width direction, length direction, and thickness direction of the first sealing member 30 are mutually perpendicular to each other. The thickness direction of the first sealing member 30 may be the arrangement direction of the first sealing surface 11 and the second sealing surface 22, for example, the thickness direction of the first sealing member 30 may be the second direction y.

In some embodiments, the length direction of the first sealing member 30 may be a direction parallel to the first surface 21. For example, the length direction of the first sealing member 30 may be the first direction x. In some embodiments, when the first direction x and the second direction y are both parallel to the first surface 21 and the first direction x and the second direction y are perpendicular to each other, the width direction of the first sealing member 30 may be a direction perpendicular to the first surface 21. In some embodiments of the present application, the direction perpendicular to the first surface 21 is defined as the third direction z. Referring to FIG. 3, the first sealing member 30 may extend along the first direction x to cover the areas requiring sealing between the first sealing surface 11 and the second sealing surface 22 in the first direction x, improving the sealing performance of the first sealing surface 11 and the second sealing surface 22.

In some other embodiments, the length direction of the first sealing member 30 may be a direction intersecting with the first surface 21, for example, the length direction of the first sealing member 30 may be the third direction z, and the width direction of the first sealing member 30 may be a direction parallel to the first surface 21, for example, the first direction x. For example, referring to FIG. 19, the second housing 20 may be an enclosure frame 26, where the enclosure frame 26 has an opening at an end in the first direction x, the first housing 10 is inserted into the second housing 20 along the first direction x and closes the opening, the first sealing surface 11 is perpendicular to the first surface 21, and the first sealing surface 11 is parallel to the first direction x and perpendicular to the second direction y. In this case, the width direction of the first sealing member 30 may be parallel to the first direction x, that is, parallel to the first surface 21.

In the above solution, by configuring the width direction of the first sealing member 30 to intersect with the first surface 21, the width direction of the first sealing member 30 is not parallel to the first surface 21. This allows the projected area of the first sealing member onto the first surface to be reduced while the first sealing member 30 plays a good sealing role, thereby reducing the space occupied by the first sealing member 30 in a direction parallel to the first surface 21, thereby improving the space utilization rate of the battery 100 in the direction parallel to the first surface 21 to accommodate more battery cells 101 or reduce the volume of the battery 100, thus enhancing the volumetric energy density of the battery 100.

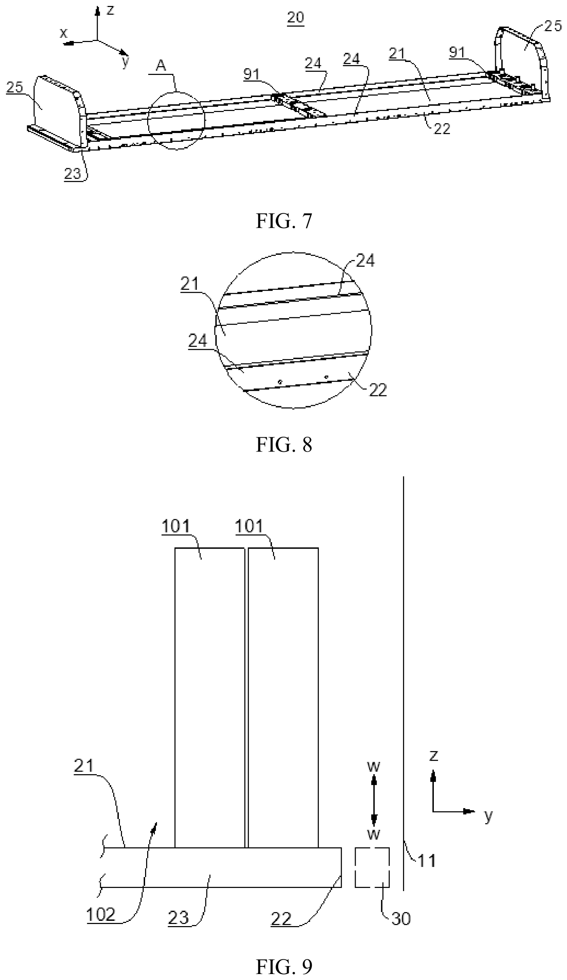

According to some embodiments of the present application, referring to FIG. 7 and FIG. 8, FIG. 7 is a perspective view of a second housing 20 according to some embodiments of the present application, and FIG. 8 is an enlarged view of position A in FIG. 7. The second housing 20 includes a second end wall 23 and a second sidewall 24, where the first surface 21 is located on the second end wall 23, at least a portion of the second sealing surface 22 is disposed on the second sidewall 24, the second sidewall 24 is connected to an end of the second end wall 23 in the second direction y, and along the second direction y, a projection of the second sidewall 24 is at least partially located on a side of the first surface 21 close to the battery cell 101.

The second end wall 23 may be the main part of the second housing 20, having the first surface 21 configured to support the battery 100. In some embodiments, the first surface 21 is the surface of the second end wall 23 in the third direction z, and the first surface 21 is disposed toward the first housing 10. In some embodiments, the second end wall 23 may be a plate-like structure, where the first surface 21 is one surface of the second end wall 23 in the third direction z. For example, the first surface 21 is the upper surface of the second end wall 23, and the lower surface of the second end wall 23 is the surface away from the closed space 102. In some other embodiments, the lower surface of the first end wall 12 is defined as the surface of the second end wall 23 away from the closed space 102, and the upper surface of the first end wall 12 is defined as the surface facing away from the lower surface of the first end wall 12, where the first surface 21 may be a portion of the upper surface of the second end wall 23. For example, the upper surface of the second end wall 23 is formed with a groove, and the first surface 21 may be the bottom surface of the groove. For another example, the upper surface of the second end wall 23 may be formed with a protrusion, and the first surface 21 may be the surface of the protrusion.

The second sidewall 24 is a component disposed at an end of the second end wall 23 in the second direction y. For example, the second sidewall 24 may be disposed on a side surface of the second end wall 23 in the second direction y. For another example, the second sidewall 24 may be disposed on the upper surface of the second end wall 23 and adjacent to the side surface of the second end wall 23 in the second direction y. The second sidewall 24 may be connected to the second end wall 23 by means such as welding, bonding, or bolting, or the second sidewall 24 may be integrally formed with the second end wall 23.

In some embodiments, the second end wall 23 may be rectangular, and the second housing 20 may include two second sidewalls 24, where the two sidewalls are spaced apart in the second direction y, each second sidewall 24 is formed with a second sealing surface 22, and the first housing 10 is correspondingly provided with two first sealing surfaces 11, enabling protruding flange structures to be eliminated from both ends of the battery 100 in the second direction y, thereby effectively improving the space utilization rate of the battery 100. In certain other embodiments, the second housing 20 may include two second sidewalls 24, with the second sealing surface 22 disposed only on one of the second sidewalls 24. In certain other embodiments, the second housing 20 may include only one second sidewall 24, and in the second direction y, the portion corresponding to the second sidewall 24 may be connected to the second end wall 23 through the structure of the first housing 10.

"At least a portion of the second sealing surface 22 is disposed on the second sidewall 24" can be understood as the second sidewall 24 being connected to the first housing 10, with the first sealing interface 103 formed between the second sidewall 24 and the first housing 10, or as at least a portion of the first sealing member 30 being disposed between the second sidewall 24 and the first housing 10. In some embodiments, the entirety of the second sealing surface 22 may be disposed on the second sidewall 24. In some embodiments, a portion of the second sealing surface 22 may be disposed on the second sidewall 24, and another portion may be disposed on the second end wall 23.

In some embodiments, the second sidewall 24 may at least partially protrude from the first surface 21. Referring to FIG. 8, the second sidewall 24 is configured to connect to a side surface of the first end wall 12, and a portion of the second sidewall 24 protrudes from the first surface 21. The portion of the second sidewall 24 protruding from the first surface 21 can constrain the battery cell 101 located in the closed space 102, and the portion of the second sidewall 24 protruding from the first surface 21 can provide more bearing area for the first sealing member 30, achieving a good sealing area, so that the first sealing member 30 is stably positioned between the first sealing surface 11 and the second sealing surface 22, achieving a good sealing effect.

"Along the second direction y, a projection of the second sidewall 24 is at least partially located on a side of the first surface 21 close to the battery cell 101" can be understood as at least a portion of the second sidewall 24 protruding from the first surface 21, or as at least a portion of the second sealing surface 22 protruding from the first surface 21.

In the above solution, the second housing 20 includes the second end wall 23 and the second sidewall 24, where the second end wall 23 has the first surface 21 to support the battery 100, and the second sealing surface 22 can be at least partially located on the second sidewall 24. This eliminates the need for the thickness of the second end wall 23 to be set large to meet the width requirements of the first sealing member 30. While meeting the installation requirements of the first sealing member 30, the second housing can be designed to be relatively lightweight or cost-effective.

According to some embodiments of the present application, referring to FIG. 6, along the second direction y, a projection of the first sealing member 30 is at least partially located on a side of the first surface 21 close to the battery cell 101.

"Along the second direction y, a projection of the first sealing member 30 is at least partially located on a side of the first surface 21 close to the battery cell 101" can be understood as at least a portion of the first sealing member 30 protruding from the first surface 21. For example, a portion of the first sealing member 30 is located on a side of the first surface 21 away from the closed space 102, and another portion of the first sealing member 30 is located on a side of the first surface 21 close to the battery cell 101. For another example, the entirety of the first sealing member 30 is located on a side of the first surface 21 close to the battery cell 101.

Referring to FIG. 6, the first sealing member 30 is clamped between the first sealing surface 11 and the second sealing surface 22. Along the third direction z, when the first surface 21 is located between the two ends of the first sealing surface 11, a portion of the first sealing surface 11 may be located below the first surface 21, and the remaining portion may be located above the first surface 21.

In the above solution, the second direction y may be the arrangement direction of the first sealing surface 11 and the second sealing surface 22, or the thickness direction of the first sealing surface 11. The projection of the first sealing member 30 along the second direction y being at least partially located on a side of the first surface 21 close to the battery cell 101 allows the first sealing member 30 to have a smaller dimension in the second direction y while maintaining a large width, thereby improving the sealing performance between the first sealing surface 11 and the second sealing surface 22 while minimizing spatial occupation in the second direction y, and enabling the battery 100 to have high reliability.

According to some embodiments of the present application, referring to FIG. 6, along the second direction y, the projection of the first sealing member 30 and the projection of the battery cell 101 at least partially overlap.

"Along the second direction y, the projection of the first sealing member 30 and the projection of the battery cell 101 at least partially overlap" can be understood as the projection of the portion of the first sealing member 30 protruding from the first surface 21 along the second direction y overlapping with the battery cell 101 located in the closed space 102; or as the first sealing member 30 being wide enough that, along the second direction y, the projection of the first sealing member 30 and the projection of the battery cell 101 at least partially overlap.

Referring to FIG. 6, the first sealing member 30 is clamped between the first sealing surface 11 and the second sealing surface 22. Along the third direction z, the first sealing surface 11 extends along the third direction z to the battery cell 101, and in the second direction y, the projection of the first sealing surface 11 at least partially overlaps with the projection of the battery cell 101, and the first sealing member 30 may correspondingly extend along the third direction z.

In the above solution, the projection of the first sealing member 30 along the second direction y at least partially overlaps with the projection of the battery cell 101, allowing the space covered by the projection of the battery cell 101 along the second direction y to be utilized for arranging at least a portion of the first sealing member 30. This enables the first sealing member 30 to have a smaller dimension in the second direction y while maintaining a maximized sealing width, thereby effectively improving the sealing performance between the first sealing surface 11 and the second sealing surface 22, and enabling the battery 100 to have high reliability.

According to some embodiments of the present application, referring to FIG. 9, FIG. 9 is a schematic diagram of a second end wall 23, a first sealing member 30, and a first sealing surface 11 according to some embodiments of the present application.

The second housing 20 includes a second end wall 23, where the first surface 21 is located on the second end wall 23, and the second sealing surface 22 is a sidewall surface of the second end wall 23 perpendicular to the second direction.

The second end wall 23 may be the main part of the second housing 20, having the first surface 21 configured to support the battery 100. In some embodiments, the first surface 21 is the surface of the second end wall 23 in the third direction z, and the first surface 21 is disposed toward the first housing 10. In some embodiments, the second end wall 23 may be a plate-like structure, where the first surface 21 is one surface of the second end wall 23 in the third direction z. For example, the first surface 21 is the upper surface of the second end wall 23, and the lower surface of the second end wall 23 is the surface away from the closed space 102. In some other embodiments, the lower surface of the first end wall 12 is defined as the surface of the second end wall 23 away from the closed space 102, and the upper surface of the first end wall 12 is defined as the surface facing away from the lower surface of the first end wall 12, where the first surface 21 may be a portion of the upper surface of the second end wall 23. For example, the upper surface of the second end wall 23 is formed with a groove, and the first surface 21 may be the bottom surface of the groove. For another example, the upper surface of the second end wall 23 may be formed with a protrusion, and the first surface 21 may be the surface of the protrusion.

The sidewall surface of the second end wall 23 in the second direction y may form the second sealing surface 22. The sidewall surface of the second end wall 23 in the second direction y can be understood as a sidewall surface intersected by the second direction, and this sidewall surface is perpendicular to the second direction y.

In some embodiments, the second end wall 23 may be rectangular, and both sidewalls in the second direction y may form second sealing surfaces 22 to be sealingly engaged with the first sealing surfaces 11 of the first housing 10. In certain other embodiments, one sidewall of the second end wall 23 in the second direction y may form a second sealing surface 22 to be sealingly engaged with one first sealing surface 11 of the first housing 10.

In the above solution, the structure of the second housing 20 is simple. The second end wall 23 of the second housing 20 serves as a component for supporting the battery cell 101; in addition, the second end wall 23 of the second housing 20 also has the second sealing surface 22 to connect to the first sealing surface 11 of the first housing 10. This allows the second housing 20 to be configured with a relatively simple structure while meeting the sealing requirements of the first sealing surface 11 and the second sealing surface 22, thereby reducing the processing cost of the second housing 20.

According to some embodiments of the present application, referring to FIG. 10, FIG. 10 is a perspective view of a first housing 10 according to some embodiments of the present application.

The first housing 10 includes a first end wall 12 and a first sidewall 13 connected to each other, where the first end wall 12 includes a first end wall surface 120 disposed opposite to the first surface 21, at least a portion of the first sealing surface 11 is disposed on the first sidewall 13, and at least a portion of the first sidewall 13 is located on a side of the first end wall surface 120 close to the first surface 21.

The first end wall 12 may be disposed opposite to the second end wall 23. In some embodiments, the first housing 10 may be the upper housing of the battery 100, the second housing 20 may be the lower housing of the battery 100, the first end wall 12 may be the top cover or top wall of the battery 100, and the second end wall 23 may be the bottom plate or bottom wall of the battery 100. The first end wall surface 120 is the surface of the first end wall 12 facing the first surface 21, and the first end wall surface 120 may be the inner surface of the first end wall 12.

The first sidewall 13 is a part connected to the first end wall 12. In some embodiments, the first sidewall 13 is bent relative to the first end wall 12 and extends toward the direction of the second housing 20. For example, the first sidewall 13 and the first end wall 12 are perpendicular, and the first sidewall 13 extends along the third direction z. The first sidewall 13 may be connected to the first end wall 12 by means such as welding, bonding, or bolting, or the first sidewall 13 may be integrally formed with the first end wall 12.

"At least a portion of the first sealing surface 11 is disposed on the first sidewall 13" can be understood as one end of the first sidewall 13 being connected to the first end wall 12, and the other end being connected to the second sealing surface 22, meaning that the first sidewall 13 connects the first end wall 12 and the second end wall 23, and that the end of the first sidewall 13 away from the first end wall 12 is directly or indirectly connected to the second sealing surface 22. This can be understood as the connection surface between the first sidewall 13 and the second housing 20 being located at the second sealing surface 22 without protruding beyond the external contour of the first housing 10 and the second housing 20 in the second direction y.

The first sidewall 13 is provided with the first sealing surface 11 to connect to the second sealing surface 22 of the second housing 20. For example, in some embodiments, the first sealing surface 11 of the first sidewall 13 is connected to the second sealing surface 22 of the second sidewall 24. Alternatively, in certain other embodiments, the first sealing surface 11 of the first sidewall 13 is connected to the second sealing surface 22 of the second end wall 23.

The first sealing surface 11 may be formed on the outer surface of the first sidewall 13 or on the inner surface of the first sidewall 13. For example, when the first sidewall 13 is connected to the second sidewall 24, and the second sidewall 24 is closer to the closed space 102 than the first sidewall 13, the first sealing surface 11 is formed on the inner surface of the first sidewall 13.

"At least a portion of the first sidewall 13 is located on a side of the first end wall surface 120 close to the first surface 21" can be understood as the first sidewall 13 protruding from the first end wall surface 120 in the direction from the first end wall 12 toward the second end wall 23.

The first sidewall 13 may be disposed at an end of the first end wall 12 in the second direction y. For example, the first sidewall 13 may be connected to a side surface of the first end wall 12 in the second direction y. For another example, the first sidewall 13 may be connected to the first end wall surface 120 and adjacent to a side surface of the first end wall 12 in the second direction y.

In some embodiments, when the battery 100 is a rectangular battery 100, that is, the first end wall 12 is a rectangular end wall, and two first sidewalls 13 may be provided, where the two sidewalls are respectively provided with first sealing surfaces 11 to be sealingly engaged with two second sealing surfaces 22 of the second housing 20; or two first sidewalls 13 may be provided, where one of the two first sidewalls 13 is provided with a first sealing surface 11 to be sealingly engaged with one first sealing surface 11 of the second housing 20. Alternatively, one first sidewall 13 may be provided, where the first sidewall 13 is connected to the second end wall 23 or the second sidewall 24.

In the above solution, the structure of the first housing 10 is simple and easy to manufacture. The first housing 10 includes the first end wall 12 and the first sidewall 13 connected to each other. By configuring at least a portion of the first sidewall 13 to be located on a side of the first end wall surface 120 close to the first surface 21, the first housing 10 and the second housing 20 can jointly define a closed space 102 for accommodating the battery cells 101; in addition, the first sealing surface 11 formed on the first sidewall 13 can have a larger area to form a good connection and sealing performance with the second sealing surface 22, and enabling the battery 100 to have high reliability.

According to some embodiments of the present application, at least a portion of the first sidewall 13 is located on a side of the first surface 21 away from the battery cell 101.

"At least a portion of the first sidewall 13 is located on a side of the first surface 21 away from the battery cell 101" can be understood as, in the direction from the first end wall 12 toward the second end wall 23, an end of the first sidewall 13 extending beyond the first surface 21, that is, as shown in FIG. 6, the first sealing surface 11 extending beyond the first surface 21. In the second direction y, the projection of the first sidewall 13 and the projection of the second end wall 23 at least partially overlap. In some embodiments, referring to FIG. 2, an end of the first sidewall 13 may be parallel to the lower surface of the second end wall 23.

In some embodiments, the height of the closed space 102 in the battery 100 may be defined by the first end wall 12 and the second end wall 23. To ensure that the battery cell 101 is within the closed space, an enclosure, such as the first sidewall 13 and the second sidewall 24, needs to be disposed between the first end wall 12 and the second end wall 23. As the primary load-bearing component of the battery 100, the second housing 20 is made of a material with higher density and cost. To minimize the mass and cost of the battery 100, the second sidewall 24 of the second housing 20 may be eliminated, that is, the first sidewall 13 is connected to the second end wall 23, or the second sidewall 24 of the second housing 20 can be made as short as possible and connected to the first sidewall 13 while maintaining good sealing performance between the first sealing surface 11 and the second sealing surface 22.

In the above solution, at least a portion of the first sidewall 13 is located on a side of the first surface 21 away from the battery cell 101, which can also be understood as that at least a portion of the first sealing surface 11 is located on a side of the first surface 21 away from the battery cell 101. This allows the area of the first sealing surface 11 to be as large as possible to form better connection stability and sealing performance with the second sealing surface 22. In addition, when the first sealing surface 11 and the second sealing surface 22 are connected by other connecting members, since the first surface 21 is the surface of the second end wall 23, the second end wall 23 can provide a larger connection dimension for the connecting members in the second direction y, improving the lock-up strength of the connecting members on the first sealing surface 11 and the second sealing surface 22, reducing the risk of detachment between the first sealing surface 11 and the second sealing surface 22, and enabling the battery 100 to have high reliability.

According to some embodiments of the present application, referring to FIG. 7, the second housing 20 further includes a third sidewall 25, where the third sidewall 25 is disposed at an end of the second end wall 23 in the first direction x, and the third sidewall 25 extends toward the first housing 10 and is connected to the first housing 10.

The third sidewall 25 is a component disposed at an end of the second end wall 23 in the first direction x. The third sidewall 25 may be connected to the second end wall 23 by means such as welding, bonding, or bolting, or the third sidewall 25 may be integrally formed with the second end wall 23. The third sidewall 25 can enhance the structural strength of the second end wall 23, enabling the second end wall 23 to stably support the battery cell 101. In some embodiments, the third sidewall 25 may be used to install components such as an explosion-proof valve, a water-cooling connector, or high- and low-voltage connectors.

In some embodiments, the third sidewall 25 may be disposed on a side surface of the second end wall 23 in the first direction x, or the third sidewall 25 may be disposed on the first surface 21 and adjacent to a side surface of the second end wall 23 in the first direction x.

In some embodiments, the battery 100 may be a rectangular battery 100, where the first end wall 12 is a rectangular end wall, the first direction x may be the length direction of the first end wall 12, and the second direction y may be the width direction of the first end wall 12. Referring to FIG. 7 and FIG. 10, the first housing 10 includes two first sidewalls 13, where the two first sidewalls 13 are spaced apart to form an opening. The third sidewall 25 may close the opening. In some embodiments, a plurality of first sidewalls 13 and a plurality of third sidewalls 25 surround the outer periphery of the closed space 102.

The third sidewall 25 may be connected to the first housing 10 by means such as welding, bonding, or bolting.

In some embodiments, a portion of the third sidewall 25 may be connected to the first end wall surface 120 of the first end wall 12, and another portion of the third sidewall 25 may be connected to the first sidewall 13. In some embodiments, a portion of the third sidewall 25 may be connected to a side surface of the first end wall 12 in the first direction x, and another portion of the third sidewall 25 may be connected to the first sidewall 13. In some embodiments, the first housing 10 is provided with a portion corresponding to the third sidewall 25, which is neither the first end wall 12 nor the first sidewall 13, so as to correspondingly connect to the third sidewall 25.

In the above solution, by disposing the third sidewall 25 at the end of the second end wall 23 in the first direction x, the second end wall 23 can be connected to the first housing 10 through the third sidewall 25 in the first direction x, thereby improving the connection stability between the first housing 10 and the second housing 20, and thus enhancing the reliability of the battery 100.

In some other embodiments, referring to FIG. 11, FIG. 11 is a perspective view of a battery 100 according to certain other embodiments of the present application. In these embodiments, the second housing 20 may not be provided with the third sidewall 25, and the first housing 10 may be provided with the third sidewall 25, that is, one end of the third sidewall 25 is connected to the first end wall 12, and the other end of the third sidewall 25 is connected to the second housing 20. For example, the other end of the third sidewall 25 is connected to the second end wall 23 or to other components disposed on the second end wall 23. This design, when the second housing 20 is made of a material with higher density and cost, can effectively reduce the mass and cost of the battery 100.

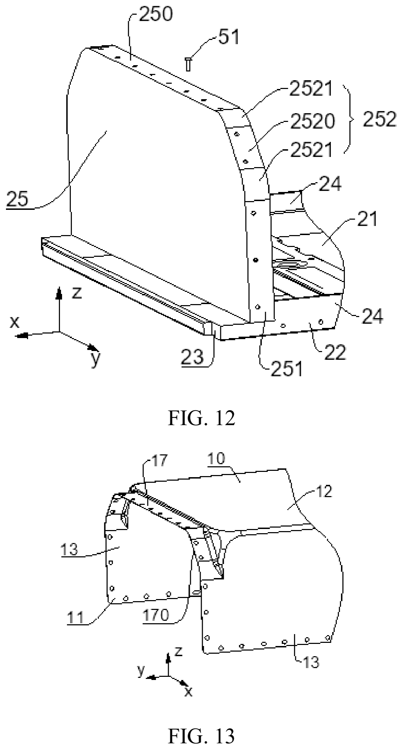

According to some embodiments of the present application, referring to FIG. 12 and FIG. 13, FIG. 12 is a schematic diagram of a partial structure of a second housing 20 according to some embodiments of the present application, and FIG. 13 is a schematic diagram of a partial structure of a first housing 10 according to some embodiments of the present application.

The third sidewall 25 includes a first flat surface 250 facing away from the first surface 21 and a second flat surface 251 intersecting with the second direction y, where the first flat surface 250 is configured to be sealingly connected to the first end wall 12, and the second flat surface 251 is configured to be sealingly connected to the first sidewall 13.

The first flat surface 250 is a flat surface located on the third sidewall 25. In some embodiments, along the third direction z, the first flat surface 250 is the surface of the third sidewall 25 facing the first end wall 12, and the first flat surface 250 is sealingly connected to the first end wall 12. For example, the first flat surface 250 is in surface contact with the first end wall surface 120, and the two are in close contact. The first flat surface 250 may be connected to the first end wall 12 by means such as welding, bonding, or bolting. In some embodiments, the first flat surface 250 may be connected to the first end wall 12 through another component. For example, referring to FIG. 13, the first end wall 12 is provided with a connection portion 17, where the connection portion is sheet-like, and a portion of the connection portion 17 is connected to the first flat surface 250.

The second flat surface 251 is a flat surface located on the third sidewall 25 and intersecting with the first flat surface 250. In some embodiments, along the second direction y, the second flat surface 251 is the surface of the third sidewall 25 facing the first sidewall 13, and the second flat surface 251 is sealingly connected to the first sidewall 13. For example, the second flat surface 251 and the first sidewall 13 cooperate with each other and the two are in close contact. The second flat surface 251 may be connected to the first sidewall 13 by means such as welding, bonding, or bolting. In some embodiments, the second flat surface 251 may be connected to the first sidewall 13 through other components, for example, referring to FIG. 13, the first sidewall 13 is provided with a connection portion 17, where the connection portion 17 is sheet-like, and a portion of the connection portion 17 is connected to the second flat surface 251.

In the above solution, the third sidewall 25 is connected to the first housing 10 through the first flat surface 250 and the second flat surface 251, effectively improving the connection stability and sealing performance between the first housing 10 and the second housing 20, and enabling the battery 100 to have high reliability. The second flat surface 251 intersecting with the second direction y and being configured for sealing connection with the first sidewall 13 effectively improves the space utilization rate of the battery 100 in the second direction y to accommodate more battery cells 101 or reduce the volume of the battery 100, thus enhancing the volumetric energy density of the battery 100.

According to some embodiments of the present application, referring to FIG. 3, the battery 100 further includes a second sealing member 40, where the second sealing member 40 is disposed between the third sidewall 25 and the first housing 10.

The second sealing member 40 may be a component with sealing properties disposed between the third sidewall 25 and the first housing 10. In some embodiments, the first sealing member 30 may be a sealant or a sealing gasket, where the second sealing member 40 is clamped between the third sidewall 25 and the first housing 10.

In some embodiments, the first sealing member 30 may be a flat, plate-like component, where the third sidewall 25 and the first housing 10 are both closely attached to the second sealing member 40, causing the second sealing member 40 to deform to fill uneven gaps between the first housing 10 and the third sidewall 25.

In some embodiments, the first sealing member 30 may be connected to the first housing 10 and the third sidewall 25 by means such as abutment, crimping, bonding, or a connecting method using other connecting members (such as threaded members). For example, through the inherent material elasticity of the first housing 10 and the second housing 20, they are pressed or abutted against each other, enabling the second sealing member 40 to be clamped between the first housing 10 and the third sidewall 25. For example, the first housing 10 and the second housing 20 are connected by bolts, enabling the second sealing member 40 to be clamped between the third sidewall 25 and the first housing 10.

In the above solution, by disposing the second sealing member 40 between the third sidewall 25 and the first housing 10, the sealing performance between the third sidewall 25 and the first housing 10 can be effectively improved, enabling the battery 100 to have high reliability.

According to some embodiments of the present application, referring to FIG. 12, the first flat surface 250 and the second flat surface 251 are connected by a transition surface 252, where the transition surface 252 includes a sloped surface and/or a curved surface, a mating surface 170 is formed at the junction between the first end wall 12 and the first sidewall 13, and the mating surface 170 is disposed corresponding to the transition surface 252.

The transition surface 252 is a part connecting the first flat surface 250 and the second flat surface 251, and by providing the transition surface 252, a smooth transition between the first flat surface 250 and the second flat surface 251 is enabled.

In some embodiments, the transition surface 252 includes a sloped surface and a curved surface. For example, in FIG. 12, the transition surface 252 includes two sloped surfaces and a curved surface located between the two sloped surfaces, where one sloped surface connects to the first flat surface 250, and the other sloped surface connects to the second flat surface 251. In some other embodiments, the transition surface 252 may include a sloped surface. In some other embodiments, the transition surface 252 may include a curved surface. For example, the first flat surface 250 and the second flat surface 251 are connected by a curved surface.

The mating surface 170 is configured to mate with the transition surface 252. The mating surface 170 and the transition surface 252 cooperate with each other to ensure good sealing performance between the third sidewall 25 and the first housing 10. In some embodiments, the mating surface 170 may include a sloped surface and a curved surface. For example, in FIG. 12, the transition surface 252 includes two curved surfaces 2521 and a sloped surface 2520 located between the two curved surfaces 2521, where one curved surface 2521 connects to the first flat surface 250, and the other curved surface 2521 connects to the second flat surface 251. Alternatively, in some embodiments, the first housing 10 is provided with a connection portion 17, where the connection portion 17 is connected to the first end wall 12 and the second sidewall 24, a portion of the connection portion 17 cooperates with the first flat surface 250, and the remaining portion of the connection portion 17 forms the mating surface 170 to cooperate with the transition surface 252.

In the above solution, by providing the transition surface 252, a smooth transition between the first flat surface 250 and the second flat surface 251 is enabled. This facilitates the second sealing member 40 to be in close contact with the surface where the third sidewall 25 and the first housing 10 are connected, and reduces the risk of sealing failure due to damage to the second sealing member 40 caused by interference from edges between the first flat surface 250 and the second flat surface 251, enabling the battery 100 to have high reliability.

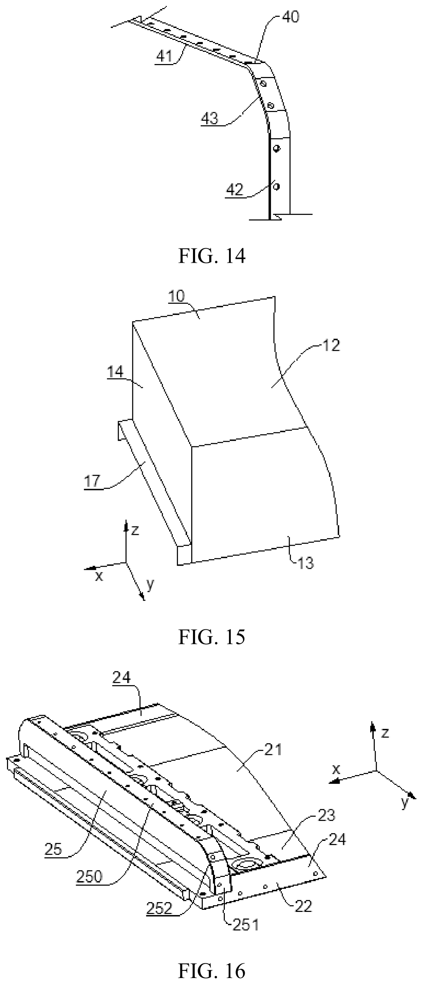

According to some embodiments of the present application, referring to FIG. 14, FIG. 14 is a schematic diagram of a partial structure of a second sealing member 40 according to some embodiments of the present application. The second sealing member 40 includes a first sub-sealing member 41, a second sub-sealing member 42, and a third sub-sealing member 43, where the first sub-sealing member 41 is disposed between the first flat surface 250 and the first end wall 12, the second sub-sealing member 42 is disposed between the second flat surface 251 and the first sidewall 13, and the third sub-sealing member 43 is disposed between the transition surface 252 and the mating surface 170.

The first sub-sealing member 41 is disposed corresponding to the first flat surface 250. In some embodiments, the first sub-sealing member 41 is clamped between the first flat surface 250 and the first end wall 12 and deforms. The second sub-sealing member 42 is disposed corresponding to the second flat surface 251. In some embodiments, the second sub-sealing member 42 is clamped between the second flat surface 251 and the first sidewall 13 and deforms. The third sub-sealing member 43 corresponds to the transition surface 252. For example, referring to FIG. 12 and FIG. 14, the third sub-sealing member 43 includes a portion corresponding to the sloped surface and a portion corresponding to the curved surface. In some embodiments, the third sub-sealing member 43 is clamped between the transition surface 252 and the mating surface 170 and deforms.

In the above solution, by configuring the second sealing member 40 to include the first sub-sealing member 41, the second sub-sealing member 42, and the third sub-sealing member 43, and disposing the first sub-sealing member 41, the second sub-sealing member 42, and the third sub-sealing member 43 respectively between the first flat surface 250 and the first end wall 12, the second flat surface 251 and the first sidewall 13, and the transition surface 252 and the mating surface, the second sealing member 40 can be in close contact with the surface where the third sidewall 25 and the first housing 10 are connected, improving the sealing performance between the first housing 10 and the second housing 20, and enabling the battery 100 to have high reliability.

According to certain other embodiments of the present application, referring to FIG. 15 and FIG. 16, FIG. 15 is a schematic diagram of a partial structure of a first housing 10 according to certain other embodiments of the present application, and FIG. 16 is a schematic diagram of a partial structure of a second housing 20 according to certain other embodiments of the present application.

The first housing 10 further includes a fourth sidewall 14, where the fourth sidewall 14 is adjacent to the first sidewall 13. One end of the fourth sidewall 14 is connected to the first end wall 12, and the third sidewall 25 is connected to the fourth sidewall 14.

The fourth sidewall 14 is a component protruding from the first end wall surface 120 and adjacent to the first sidewall 13. The fourth sidewall 14 may be connected to the first end wall 12 by welding, bonding, or bolting, or the fourth sidewall 14 may be integrally formed with the first end wall 12. When the first housing 10 has two first sidewalls 13 disposed opposite each other in the second direction y, the fourth sidewall 14 is located between the two first sidewalls 13, and one end of the fourth sidewall 14 is connected to the first end wall 12, with opposite ends of the fourth sidewall 14 in the second direction y respectively connected to the two first sidewalls 13.

In some embodiments, the fourth sidewall 14 is formed with a part that is configured to connect to the first flat surface 250 of the third sidewall 25, a part that is configured to connect to the second flat surface 251, and a mating surface that is configured to connect to the transition surface 252. In some embodiments, referring to FIG. 12 to FIG. 16, by providing the fourth sidewall 14, the dimension of the third sidewall 25 in the third direction z can be reduced, that is, a larger dimension of the fourth sidewall 14 in the third direction z indicates a smaller dimension of the third sidewall 25 in the first direction x.

In some embodiments, the first housing 10 may be the upper housing, and the second housing 20 may be the lower housing, where the material cost and density of the upper housing may be lower than those of the lower housing. Therefore, by providing the fourth sidewall 14 to increase the proportion of the first housing 10 in the battery 100, the manufacturing cost of the battery 100 can be effectively reduced, and the gravimetric energy density of the battery 100 can be enhanced.

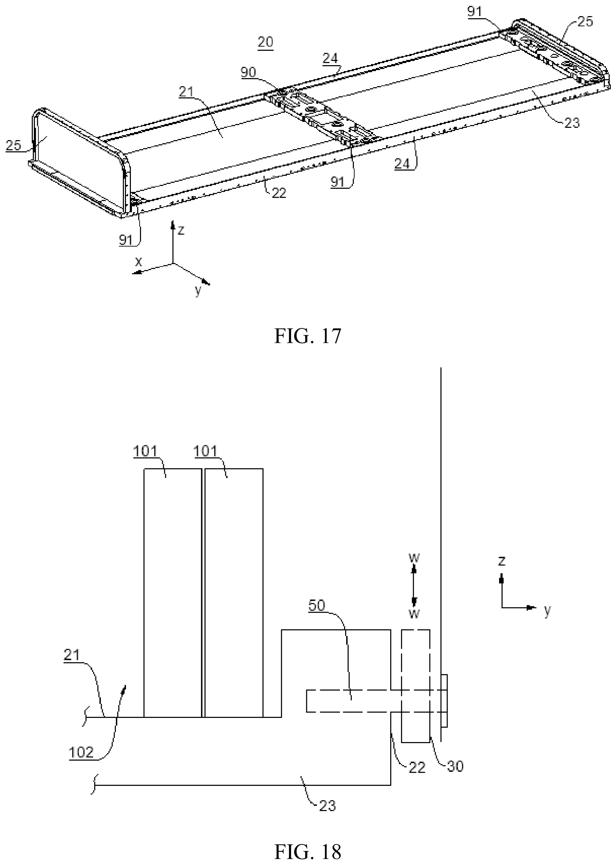

In some other embodiments, referring to FIG. 17, FIG. 17 is a schematic diagram of a second housing 20 according to some other embodiments of the present application. The dimension of one third sidewall 25 in the third direction z is smaller than the dimension of another third sidewall 25 in the third direction z.

The dimension of the third sidewall 25 in the third direction z may be regarded as the height of the third sidewall 25. Due to the different heights of the two third sidewalls 25, the height difference can be compensated by the first housing 10. The third sidewall 25 with a larger dimension may be installed with components such as an explosion-proof valve, a water-cooling connector, or high- and low-voltage connectors. By reducing the dimension of the other third sidewall 25, the dimension of the part of the first housing 10 corresponding to the third sidewall 25 can be adaptively increased. For example, by providing a fourth sidewall 14 or increasing the dimension of the fourth sidewall 14, the proportion of the first housing 10 in the battery 100 increases, thereby reducing the manufacturing cost of the battery 100, and enhancing the gravimetric energy density of the battery 100.

According to some embodiments of the present application, referring to FIG. 6, the battery 100 further includes a first fastener 50, where the first fastener 50 passes through the first sealing interface 103 along the second direction y and is locked into the interior of the second end wall 23.

The first fastener 50 is a component capable of connecting the first housing 10 and the second housing 20. In some embodiments, one end of the first fastener 50 may pass through the first sealing surface 11 and the second sealing surface 22 along the second direction y and be locked into the interior of the second end wall 23. For example, referring to FIG. 3 and FIG. 6, one end of the first fastener 50 may pass through the first sidewall 13 and the first sealing member 30 and be locked into the interior of the second end wall 23. The first fastener 50 may be a connecting member with external threads, such as a bolt or screw. The first fastener 50 may alternatively be a connecting member such as a pin or rivet.

In some embodiments, the first fastener 50 is a bolt, the first sidewall 13 and the first sealing member 30 are respectively provided with through holes, the second end wall 23 is formed with a threaded hole, and the bolt can pass through the through holes in the first sidewall 13 and the first sealing member 30 and be locked up into the threaded hole.

In some embodiments, the first fastener 50 may not be locked into the second end wall 23, and the first fastener 50 may be locked into the second sidewall 24.

In the above solution, the second end wall 23 can provide a deeper lock-up depth for the first fastener 50 in the second direction y. By providing the first fastener 50 that passes through the first sealing interface 103 and is locked into the interior of the second end wall 23, the connection stability between the first housing 10 and the second housing 20 can be effectively improved, thereby enhancing the structural stability of the battery 100, and enabling the battery 100 to have high reliability.

According to some embodiments of the present application, referring to FIG. 6, a portion of the first fastener 50 locked into the second end wall 23 is located on a side of the first surface 21 away from the closed space 102.

As shown in FIG. 6, when the space above the first surface 21 is the closed space 102, the area below the first surface 21 can be understood as the side of the first surface 21 away from the closed space 102.

A portion of the first fastener 50 locked into the second end wall 23 being located on a side of the first surface 21 away from the closed space 102 can be understood as the first end wall 12 providing a deeper lock-up depth for the first fastener 50. For example, in the third direction z, a portion of the projection of the first fastener 50 may fall within the projection of the first surface 21.

In certain other embodiments, referring to FIG. 18, FIG. 18 is a schematic diagram of a first fastener 50 and a first surface 21 according to certain other embodiments of the present application. A portion of the first fastener 50 locked into the second end wall 23 may alternatively be located on a side of the first surface 21 close to the closed space 102. In these embodiments, the first surface 21 is recessed relative to an edge of the first end wall 12, and the first fastener 50 may be locked into the edge of the first end wall 12 and located on a side of the first surface 21 close to the closed space 102.

In the above solution, by configuring the portion of the first fastener 50 locked into the second end wall 23 to be located on a side of the first surface 21 away from the closed space 102, the first fastener 50 does not occupy the closed space 102, improving the utilization rate of the closed space 102 and enhancing the volumetric energy density of the battery 100, while also reducing the risk of the first fastener 50 interfering with the battery cell 101. In addition, the second end wall 23 can provide a deeper lock-up depth for the first fastener 50, ensuring that the first fastener 50 is securely locked up into the second end wall 23, improving the connection stability between the first housing 10 and the second housing 20, and enabling the battery 100 to have high reliability.

According to some embodiments of the present application, referring to FIG. 6, along a direction perpendicular to the first surface 21, a projection of the first fastener 50 at least partially overlaps with a projection of the battery cell 101.

"Along a direction perpendicular to the first surface 21, a projection of the first fastener 50 at least partially overlaps with a projection of the battery cell 101" can be understood as the first fastener 50 being locked up into the second end wall 23 with a deeper depth, that is, the first fastener 50 extends along its lock-up direction. For example, the portion extending along the second direction y into the second end wall 23 has a projection in the third direction z that at least partially overlaps with the projection of the battery cell 101 located in the closed space 102.

In the above solution, along a direction perpendicular to the first surface 21, the projection of the first fastener 50 at least partially overlaps with the projection of the battery cell 101, which ensures that the second end wall 23 provides a deeper lock-up depth for the first fastener 50, allowing the first fastener 50 to be securely locked up into the second end wall 23, improving the connection stability between the first housing 10 and the second housing 20, and enabling the battery 100 to have high reliability.

According to some embodiments of the present application, referring to FIG. 3 and FIG. 7, the second housing 20 further includes a third sidewall 25, where the third sidewall 25 is disposed at an end of the second end wall 23 in the first direction x, and the battery 100 further includes a second fastener 51 (see FIG. 12), where the second fastener 51 is configured to connect the third sidewall 25 and the first housing 10, and the second fastener 51 is locked into the interior of the third sidewall 25.

The second fastener 51 is a component capable of connecting the first housing 10 and the third sidewall 25. In some embodiments, one end of the second fastener 51 may pass through the first housing 10 and be locked into the interior of the third sidewall 25.

The second fastener 51 may be a connecting member with external threads, such as a bolt or screw. The second fastener 51 may alternatively be a connecting member such as a pin or rivet.

In some embodiments, the second fastener 51 is a bolt, the first housing 10 and the second sealing member 40 are respectively provided with through holes, the third sidewall 25 is formed with a threaded hole, and the bolt can pass through the through holes in the first housing 10 and the second sealing member 40 and be locked up into the threaded hole in the third sidewall 25.

Referring to FIG. 12, the threaded hole may be provided on a flat surface to enable the bolt to connect the first housing 10 and the third sidewall 25. In FIG. 12, the first flat surface 250, the second flat surface 251, and the sloped surface of the transition surface 252 are respectively provided with threaded holes.

In the above solution, by disposing the third sidewall 25 at the end of the second end wall 23 in the first direction x and connecting the third sidewall 25 and the first housing 10 through the second fastener 51, a stable connection relationship between the third sidewall 25 and the first housing 10 is achieved, thereby improving the connection stability between the first housing 10 and the second housing 20, and thus enhancing the reliability of the battery 100.

According to some embodiments of the present application, referring to FIG. 19, FIG. 19 is a schematic diagram of a specific structure of a battery 100 according to certain other embodiments of the present application.

A first sealing member 30 is disposed between the first sealing surface 11 and the second sealing surface 22, where along a width direction of the first sealing member 30, one end of the first sealing member 30 is close to the closed space 102, the other end of the first sealing member 30 is close to the exterior of the battery 100, and the width direction of the first sealing member 30 is parallel to the first surface 21.

The width direction, length direction, and thickness direction of the first sealing member 30 are mutually perpendicular to each other. The thickness direction of the first sealing member 30 may be the arrangement direction of the first sealing surface 11 and the second sealing surface 22, for example, the thickness direction of the first sealing member 30 may be the second direction y.

In some embodiments, the length direction of the first sealing member 30 may be a direction intersecting with the first surface 21. For example, the length direction of the first sealing member 30 may be the third direction z, and the width direction of the first sealing member 30 may be a direction parallel to the first surface 21, for example, the first direction x. For example, referring to FIG. 19, the second housing 20 may be an enclosure frame 26, where the enclosure frame 26 has an opening at an end in the first direction x, the first housing 10 is inserted into the second housing 20 along the first direction x and closes the opening, the first sealing surface 11 is perpendicular to the first surface 21, and the first sealing surface 11 is parallel to the first direction x and perpendicular to the second direction y. In this case, the width direction of the first sealing member 30 may be parallel to the first direction x, that is, parallel to the first surface 21.

In the above solution, by configuring the width direction of the first sealing member 30 to be parallel to the first surface 21, for example, the width direction of the first sealing member 30 being parallel to the first direction x, the thickness of the first sealing member 30 in the second direction y can be reduced while the first sealing member 30 plays a good sealing role, thereby improving the space utilization rate of the battery 100 in the second direction y to accommodate more battery cells 101 or reduce the volume of the battery 100, thus enhancing the volumetric energy density of the battery 100.

According to some embodiments of the present application, referring to FIG. 19, the second housing 20 includes an enclosure frame 26, where along the first direction x, the enclosure frame 26 forms an opening, the first housing 10 includes a plug plate 15, and the plug plate 15 is at least partially inserted into the interior of the enclosure frame 26 along the first direction x to close the opening.

In some embodiments, the enclosure frame 26 may refer to the second housing 20 having a cavity inside, where the cavity is enclosed by the walls of the second housing 20. Referring to FIG. 19, the enclosure frame 26 may be a cuboid with an internal cavity, where the enclosure frame 26 has an opening at an end in the first direction x, and the opening communicates with the interior of the enclosure frame 26.

The first housing 10 may include a plug plate 15, where the plug plate 15 is configured to connect to the enclosure frame 26 to close the opening, so that the battery cell 101 is inside the enclosure frame 26, that is, within the closed space 102.

"The plug plate 15 is at least partially inserted into the interior of the enclosure frame 26 along the first direction x" can be understood as the plug plate 15 being inserted into the enclosure frame 26 to close the opening. For example, the outer contour of the plug plate 15 corresponds to the opening, and the plug plate 15 is embedded in the opening to close the opening; or as a portion of the plug plate 15 being inserted into the enclosure frame 26 to connect to the enclosure frame 26 and close the opening.

In the above solution, the second housing 20 may include an enclosure frame 26, where the enclosure frame 26 forms an opening at an end in the first direction x, and the battery cell 101 can be placed into the enclosure frame 26 through the opening. The first housing 10 may include a plug plate 15, where the plug plate 15 can be inserted into the interior of the enclosure frame 26 along the first direction x to close the opening, thereby not occupying additional space in the second direction y. That is, the maximum dimension of the outer contour of the battery 100 can be the maximum dimension of the outer contour of the enclosure frame 26, so that the battery 100 has a higher space utilization rate to accommodate more battery cells 101 or achieve a smaller volume, enabling the battery 100 to have high volumetric energy density.

According to certain other embodiments of the present application, referring to FIG. 20, FIG. 20 is a schematic diagram of a first housing 10 according to certain other embodiments of the present application. The first housing 10 further includes an extension wall plate 16, where at least a portion of the first sealing surface 11 is disposed on the extension wall plate 16, the extension wall plate 16 is disposed at an end of the plug plate 15 in the second direction y, and the plug plate 15 has a cover surface facing the battery cell 101. Along the second direction y, a projection of the extension wall plate 16 is at least partially located on a side of the cover surface close to the battery cell 101.

The plug plate 15 may be a component of the first housing 10 configured to close the opening of the enclosure frame 26. The surface of the plug plate 15 facing the closed space 102 is the cover surface.

The extension wall plate 16 is a component disposed on the plug plate 15. In some embodiments, the extension wall plate 16 is disposed on a side surface of the plug plate 15 in the second direction y, or the extension wall plate 16 is disposed on the cover surface of the plug plate 15 and adjacent to a side surface of the plug plate 15 in the second direction y, or the extension wall plate is connected to the plug plate 15 and adjacent to a side surface of the plug plate 15 in the second direction y.

In some embodiments, the first housing 10 is inserted into the opening of the enclosure frame 26 along the first direction x, the plug plate 15 closes the opening of the enclosure frame 26, and the extension wall plate 16 passes through the opening and is connected to the enclosure frame 26. Alternatively, the first housing 10 is inserted into the opening of the enclosure frame 26 along the first direction x, the plug plate 15 closes the opening of the enclosure frame 26, and the extension wall plate 16 is connected to the enclosure frame 26.

"At least a portion of the first sealing surface 11 is disposed on the extension wall plate 16" can be understood as the extension wall plate 16 being formed with at least a portion of the first sealing surface 11 to connect to the second sealing surface 22 of the second housing 20. In some embodiments, referring to FIG. 20, the plug plate 15 is provided with two extension wall plates 16, where the two extension wall plates 16 may be spaced apart in the second direction y and respectively connected to the enclosure frame 26. The two extension wall plates 16 have two surfaces facing away from each other in the second direction y, and these two surfaces may respectively form first sealing surfaces 11.

At least a portion of the first sealing surface 11 may be formed on the outer side surface of the extension wall plate 16, and the first sealing surface 11 may connect to the inner wall surface of the enclosure frame 26. At least a portion of the first sealing surface 11 may also be formed on the inner side surface of the extension wall plate 16, and the first sealing surface 11 may connect to the outer wall surface of the enclosure frame 26.

In some embodiments, a portion of the first sealing surface 11 may be disposed on the extension wall plate 16, and another portion of the first sealing surface 11 may be disposed on the plug plate 15.

Referring to FIG. 19, the cover surface of the plug plate 15 may be provided with a ring-shaped extension wall, where the extension wall has a first sealing surface 11 in the second direction y. In some embodiments, the first sealing surface 11 is formed on the outer side surface of the extension wall, the extension wall is embedded in the opening, and the outer side surface of the extension wall may connect to the wall of the opening. The wall of the opening may be the inner wall surface of the enclosure frame 26.

In the above solution, by providing the extension wall plate 16, the area of the first sealing surface 11 can be made as large as possible to effectively connect to the second sealing surface 22 of the second housing 20, thereby improving the connection stability between the first housing 10 and the second housing 20 and enhancing the reliability of the battery 100. In addition, by configuring the projection of the extension wall plate 16 along the second direction y to be at least partially located on a side of the cover surface close to the battery cell 101, the extension wall plate 16 is prevented from protruding outward and increasing the overall dimension of the battery 100 in the first direction x, thereby improving the space utilization rate of the battery 100 in the first direction x to accommodate more battery cells 101 or allow the battery 100 to achieve a smaller volume, enabling the battery 100 to have high volumetric energy density.

According to some embodiments of the present application, along the second direction y, the projection of the first sealing member 30 is at least partially located on a side of the cover surface close to the battery cell 101.

"A side of the cover surface close to the battery cell 101" can be understood as the inner side of the cover surface, and a side of the cover surface away from the battery cell 101 can be understood as the outer side of the cover surface.

"Along the second direction y, the projection of the first sealing member 30 is at least partially located on a side of the cover surface close to the battery cell 101" can be understood as a portion of the first sealing member 30 being located within the closed space 102.

In the above solution, by configuring the projection of the first sealing member 30 along the second direction y to be at least partially located on a side of the cover surface close to the battery cell 101, the sealing performance between the extension wall plate 16 and the second housing 20 can be improved. In addition, by disposing a portion of the first sealing member 30 within the closed space 102, the first sealing member 30 can avoid occupying space outside the battery 100 in the first direction x as much as possible, thereby improving the space utilization rate of the battery 100 in the first direction x to accommodate more battery cells 101 or allow the battery 100 to achieve a smaller volume, enabling the battery 100 to have high volumetric energy density.

According to some embodiments of the present application, along the second direction y, the projection of the first sealing member 30 at least partially overlaps with the projection of the battery cell 101.

In some embodiments, the first sealing surface 11 may extend into the closed space 102, and along the second direction y, the projections of the first sealing surface 11 and the second sealing surface 22 may at least partially overlap with the projection of the battery cell 101, enabling the first housing 10 and the second housing 20 to have a larger connection area and sealing area. Correspondingly, the first sealing member 30 located between the first sealing surface 11 and the second sealing surface 22 also has a larger area.

In the above solution, by configuring the projection of the first sealing member 30 along the second direction y to at least partially overlap with the projection of the battery cell 101, the first sealing member 30 can avoid occupying space in the first direction x as much as possible, thereby improving the space utilization rate of the battery 100 in the first direction x to accommodate more battery cells 101 or allow the battery 100 to achieve a smaller volume, enabling the battery 100 to have high volumetric energy density.

According to some embodiments of the present application, the second sealing surface 22 is disposed on an inner wall surface of the enclosure frame 26, and at least a portion of the first sealing surface 11 is disposed on an outer wall surface of the plug plate 15.

In some embodiments, for example, in FIG. 19, the outer contour dimension of the plug plate 15 is smaller than the outer contour dimension of the enclosure frame 26, and the plug plate 15 can be embedded in the opening. In these embodiments, the first sealing surface 11 may be disposed on the outer wall surface of the plug plate 15, and the second sealing surface 22 may be disposed on the inner wall surface of the enclosure frame 26.

In certain other embodiments, the outer contour of the first housing 10 may be larger than the outer contour of the enclosure frame 26, and the first housing 10 may be placed over the enclosure frame 26. In these embodiments, the second sealing surface 22 may be disposed on the outer wall surface of the enclosure frame 26.

In the above solution, the outer wall surface of the plug plate 15 can be provided with the first sealing surface 11 to connect to the inner wall surface of the enclosure frame 26, eliminating the need for additional connecting walls, simplifying the processing of the housing, and reducing processing costs.

According to some embodiments of the present application, referring to FIG. 20, the battery 100 further includes a first connecting member 52, where the first connecting member 52 passes through the first sealing interface 103 along the second direction y and is locked into the plug plate 15.

The first connecting member 52 is a component capable of connecting the first housing 10 and the second housing 20. In some embodiments, one end of the first connecting member 52 may pass through the first sealing surface 11 and the second sealing surface 22 along the second direction y and be locked into the interior of the second end wall 23. One end of the first connecting member 52 may pass through a wall of the second housing 20, the first sealing member 30, and be locked into the interior of the plug plate 15. The first connecting member 52 may be a connecting member with external threads, such as a bolt or screw. The first connecting member 52 may alternatively be a connecting member such as a pin or rivet.

In some embodiments, the first connecting member 52 is a bolt, a wall of the first housing 10 and the first sealing member 30 are respectively provided with through holes, the plug plate 15 is formed with a threaded hole, and the bolt can pass through the through holes in the wall of the first housing 10 and the first sealing member 30 and be locked up into the threaded hole in the plug plate 15.

In some embodiments, the first connecting member 52 may not be locked into the plug plate 15, and the first connecting member 52 may be locked into the extension wall plate 16.

In the above solution, by providing the first connecting member 52 to connect the plug plate 15 and the enclosure frame 26, the connection stability between the plug plate 15 and the enclosure frame 26 can be improved, thereby enhancing the structural stability of the battery 100, and enabling the battery 100 to have high reliability.

According to some embodiments of the present application, along the first direction x, the projection of the first connecting member 52 at least partially overlaps with the projection of the battery cell 101.

The first direction x is the insertion direction of the plug plate 15. The first direction x may be perpendicular to the lock-up direction of the first connecting member 52.

"Along the first direction x, the projection of the first connecting member 52 at least partially overlaps with the projection of the battery cell 101" can be understood as the first connecting member 52 being locked up into the plug plate 15 with a deeper depth, that is, the first connecting member 52 extends along its lock-up direction, for example, the portion extending along the second direction y into the plug plate 15 has a projection in the first direction x that at least partially overlaps with the projection of the battery cell 101 located in the closed space 102.

In the above solution, along the first direction x, the projection of the first connecting member 52 at least partially overlaps with the projection of the battery cell 101, which ensures that the plug plate 15 provides a deeper lock-up depth for the first connecting member 52, allowing the first connecting member 52 to be securely locked up into the plug plate 15, improving the connection stability between the plug plate 15 and the second housing 20, and enabling the battery 100 to have high reliability.

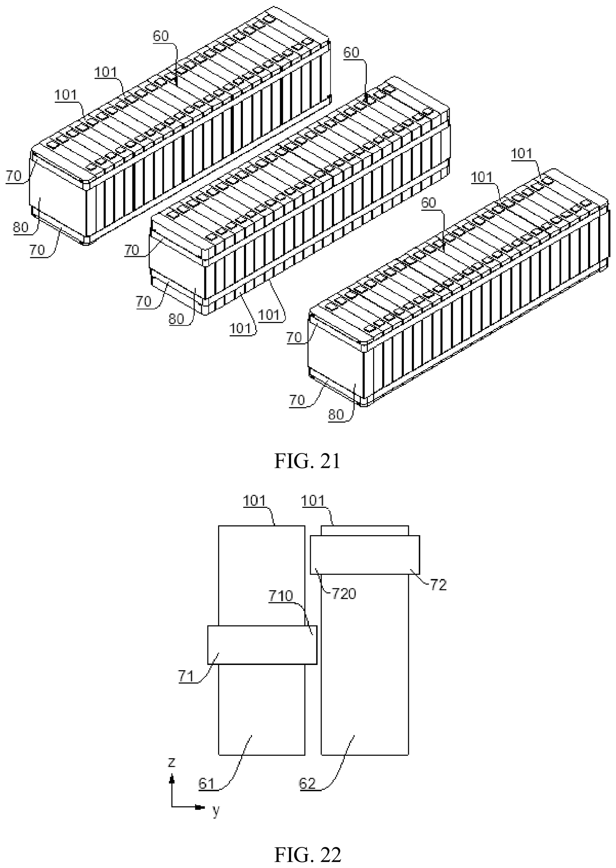

According to some embodiments of the present application, referring to FIG. 21, FIG. 21 is a schematic diagram of a battery module 60 according to some embodiments of the present application. The battery 100 includes at least one battery module 60, where the battery module 60 includes a plurality of battery cells 101 arranged in a group. The battery module 60 is provided with a strapping member 70, where the strapping member 70 is configured to bind the plurality of battery cells 101 arranged in a group.

The battery module 60 may include a plurality of battery cells 101 arranged in a group, for example, a plurality of battery cells 101 stacked along the thickness direction of the battery cells 101. The battery module 60 may be provided with a strapping member 70, where the strapping member 70 is configured to bind the plurality of battery cells 101 arranged in a group, so that the plurality of battery cells 101 form a relatively stable structure. In some embodiments, the strapping member 70 may be a ring-shaped structure capable of being placed over the periphery of the plurality of battery cells 101. In certain other embodiments, the strapping member 70 may be a rope-like structure with its ends interconnected to bind the plurality of battery cells 101.

In some embodiments, the battery module 60 may include an end plate 80, a strapping member 70, and a plurality of battery cells 101, where the plurality of battery cells 101 are stacked along the thickness direction of the battery cells 101, two end plates 80 are respectively disposed at two ends of the plurality of battery cells 101, and the strapping member 70 binds the two end plates and the plurality of battery cells 101 together.

In some embodiments, the battery 100 has at least one battery module 60. For example, the closed space 102 within the battery 100 accommodates one battery module 60 or a plurality of battery modules 60. The plurality of battery modules 60 may refer to two or more battery modules 60.

In the above solution, the plurality of battery cells 101 arranged in a group in the battery module 60 are bound by the strapping member 70 to be orderly arranged in the closed space 102, improving the utilization rate of the closed space 102 and thus enhancing the energy density of the battery 100.

According to some embodiments of the present application, referring to FIG. 22, FIG. 22 is a schematic diagram of a first battery module 61 and a second battery module 62 according to some embodiments of the present application.

The battery module 60 includes a first battery module 61 and a second battery module 62 arranged adjacent to each other along the second direction y. The first battery module 61 is provided with a first strapping member 71, and the second battery module 62 is provided with a second strapping member 72. Along the second direction y, a first portion 710 of the first strapping member 71 is disposed on a side of the first battery module 61 facing the second battery module 62, and a second portion 720 of the second strapping member 72 is disposed on a side of the second battery module 62 facing the first battery module 61. Along the second direction y, a projection of the first portion 710 and a projection of the second portion 720 are offset, and along a direction perpendicular to the first surface 21, the projection of the first portion 710 and the projection of the second portion 720 at least partially overlap.

The battery 100 includes a plurality of battery modules 60, where the plurality of battery modules 60 may be arranged in the second direction y. In some embodiments, along the second direction y, the projections of the strapping members 70 corresponding to each battery module 60 may be offset from each other, so that in the second direction y, adjacent portions of strapping members 70 for two battery modules 60 may be offset to reduce the space occupied by the strapping members 70 in the second direction y. In some embodiments, in the third direction z (along a direction perpendicular to the first surface 21), projections of the adjacent portions of the strapping members 70 for two battery modules 60 may at least partially overlap, that is, in the third direction z, the adjacent portions of the strapping members 70 for two battery modules 60 may share a portion of the space, reducing the space occupied by the strapping members 70 in the second direction y.

In some embodiments, the first battery module 61 and the second battery module 62 can be understood as two battery modules 60 adjacent to each other in the second direction y among the plurality of battery modules 60 in the battery 100. For example, in FIG. 22, the first battery module 61 and the second battery module 62 are arranged in the second direction y, where the first strapping member 71 corresponding to the first battery module 61 can bind a plurality of battery cells 101 of the first battery module 61, and the second strapping member 72 corresponding to the second battery module 62 can bind a plurality of battery cells 101 of the second battery module 62. The first portion 710 is a portion of the first strapping member 71 located between the plurality of battery cells 101 of the first battery module 61 and the second battery module 62 in the second direction y. The second portion 720 is a portion of the second strapping member 72 located between the plurality of battery cells 101 of the second battery module 62 and the first battery module 61 in the second direction y. In the second direction y, a projection of the first portion 710 and a projection of the second portion 720 are offset, and in the third direction z, a projection of the first portion 710 and a projection of the second portion 720 may overlap with each other.

In the above solution, by configuring the projection of the first portion 710 and the projection of the second portion 720 along the second direction y to be offset, and the projection of the first portion 710 and the projection of the second portion 720 along the first direction x to at least partially overlap, the space occupied by the strapping member 70 in the second direction y can be effectively reduced, improving the utilization rate of the closed space 102 by the plurality of battery modules 60, and thus enhancing the volumetric energy density of the battery 100.

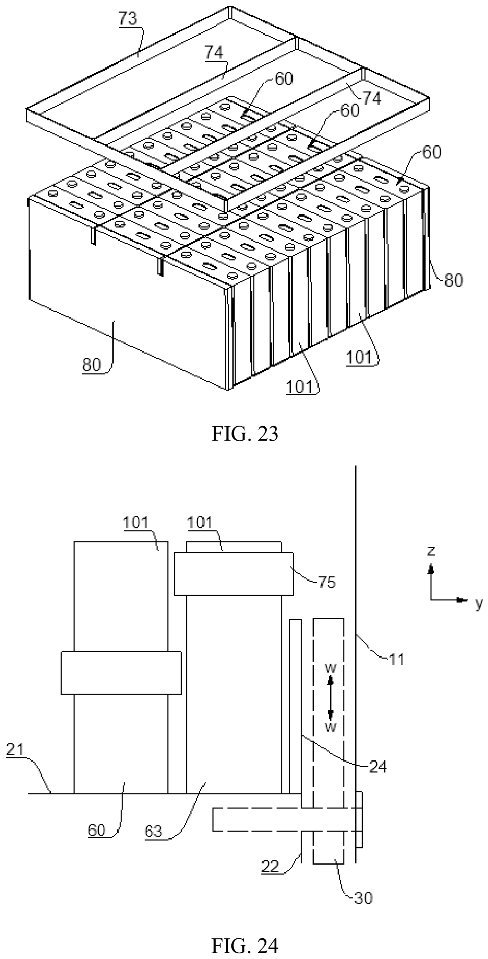

According to certain other embodiments of the present application, referring to FIG. 23, FIG. 23 is a schematic diagram of a strapping member 70 and a battery module 60 according to certain other embodiments of the present application. The battery modules 60 are provided in plurality. The strapping member 70 includes an outer frame 73 and a partition strip 74, where the partition strip 74 is disposed inside the outer frame 73 and divides the interior of the outer frame 73 into a plurality of subspaces, with each battery module 60 respectively disposed in a subspace.

The battery module 60 may include a plurality of battery cells 101 arranged in a group, where the plurality of battery cells 101 are stacked along the thickness direction of the battery cells 101. In the battery 100, battery modules 60 are provided in plurality, for example, two, three, four, or five.

The strapping member 70 is configured to bind the plurality of battery cells 101 arranged in a group. In some embodiments, the strapping member 70 is configured to bind a plurality of groups of battery cells 101, that is, to bind a plurality of battery modules 60. Referring to FIG. 23, the strapping member 70 can bind three battery modules 60.

The strapping member 70 may include an outer frame 73 and a partition strip 74. Multiple battery modules 60 are arranged, for example, in FIG. 22, three battery modules 60 are arranged along the width direction of the battery cells 101, and the outer frame 73 is disposed along the outer periphery of the three battery modules 60. The partition strip 74 is disposed inside the outer frame 73 and connected to the inner wall of the outer frame 73, dividing the interior of the outer frame 73 into multiple subspaces. In FIG. 23, the number of partition strips 74 is two, where the two partition strips 74 divide the interior of the outer frame 73 into three subspaces, and the three battery modules 60 are respectively disposed in the corresponding subspaces.

In some embodiments, the outer frame 73 and the partition strip 74 may be integrally formed. In some embodiments, the partition strip 74 may be connected to the outer frame 73 by bonding, welding, or a connecting method using other connecting members.

In the above solution, the strapping member 70 includes the outer frame 73 and the partition strip 74, where the partition strip 74 divides the casing into multiple subspaces, enabling a single strapping member 70 to simultaneously bind a plurality of battery modules 60, thereby reducing the space occupied by the strapping member 70 in the closed space 102, allowing the closed space 102 to accommodate more battery cells 101, and enabling the battery 100 to have high volumetric energy density.

According to some embodiments of the present application, referring to FIG. 23, battery modules 60 are provided in plurality, where the plurality of battery modules 60 are arranged along the second direction y. The battery 100 further includes an end plate 80, where the end plate 80 is connected to end faces of the plurality of battery modules 60 in the first direction x, and the strapping member 70 is connected to the end plate 80.

In some embodiments, the battery module 60 may include a plurality of battery cells 101 arranged in a group, where the plurality of battery cells 101 are stacked along the thickness direction of the battery cells 101. In the battery 100, battery modules 60 are provided in plurality, for example, two, three, four, or five. The plurality of battery modules 60 may be arranged side by side, for example, arranged side by side along the second direction y. In the stacking direction of the battery cells 101, the battery 100 is provided with end plates 80, where two end plates 80 may be disposed at two ends of the plurality of battery modules 60 in the stacking direction.

In some embodiments, the dimension of the end wall in the side-by-side direction of the plurality of battery modules 60 may be greater than or equal to the dimension of the plurality of battery modules 60 in the side-by-side direction, meaning that the end wall can cover the plurality of battery modules 60 to fasten and bind the plurality of battery modules 60 together under the action of the strapping member 70.

Referring to FIG. 23, a wall of the end plate 80 is provided with slots, and a portion of the strapping member 70 may be disposed in the slots. In some embodiments, each battery module 60 corresponds to one strapping member 70, and a portion of the strapping member 70 may be disposed in the slots to bind the battery module 60 to the end wall. In some embodiments, a plurality of battery modules 60 correspond to one strapping member 70, where the partition strip 74 in the strapping member 70 may be disposed in the slots to bind the plurality of battery modules 60 to the end wall.

In the above solution, the plurality of battery modules 60 are arranged along the second direction y, with an end plate 80 disposed at one end of the plurality of battery modules 60 in the first direction x. By connecting the strapping member 70 to the end plate 80, the plurality of battery modules 60 can be effectively integrated into a compact arrangement, improving the utilization rate of the closed space 102, and enabling the battery 100 to have high volumetric energy density.

According to some embodiments of the present application, referring to FIG. 24, FIG. 24 is a schematic diagram of a battery module 60 and a second sidewall 24 according to some embodiments of the present application.

The second housing 20 includes a second end wall 23 and a second sidewall 24, where the first surface 21 is located on the second end wall 23, the first sealing surface 11 is located on the second sidewall 24, and the second sidewall 24 is connected to an end of the second end wall 23 in the second direction y. The battery module 60 includes a side battery module 63 arranged adjacent to the second sidewall 24 in the second direction y, and the strapping member 70 includes a side portion 75, where the side portion 75 is disposed on a side of the side battery module 63 facing the second sidewall 24 in the second direction y, and the second sidewall 24 is located on a side of the side portion 75 close to the first surface 21.

The second end wall 23 may be the main part of the second housing 20, having the first surface 21 configured to support the battery 100. In some embodiments, the first surface 21 is the surface of the second end wall 23 along the third direction z, and the first surface 21 is disposed toward the first housing 10. In some embodiments, the second end wall 23 may be a plate-like structure, where the first surface 21 is one surface of the second end wall 23 in the third direction z, for example, the first surface 21 is the upper surface of the second end wall 23, and the lower surface of the second end wall 23 is the surface away from the closed space 102. In some other embodiments, the lower surface of the first end wall 12 is defined as the surface of the second end wall 23 away from the closed space 102, and the upper surface of the first end wall 12 is defined as the surface facing away from the lower surface of the first end wall 12, where the first surface 21 may be a portion of the upper surface of the second end wall 23, for example, the upper surface of the second end wall 23 is formed with a groove, and the first surface 21 may be the bottom surface of the groove. For another example, the upper surface of the second end wall 23 may be formed with a protrusion, and the first surface 21 may be the surface of the protrusion.

The second sidewall 24 is a component disposed at an end of the second end wall 23 in the second direction y, for example, the second sidewall 24 may be disposed on a side surface of the second end wall 23 in the second direction y, or the second sidewall 24 may be disposed on the upper surface of the second end wall 23 and adjacent to a side surface of the second end wall 23 in the second direction y. The second sidewall 24 may be connected to the second end wall 23 by means such as welding, bonding, or bolting, or the second sidewall 24 may be integrally formed with the second end wall 23.

In some embodiments, the battery 100 may include one battery module 60, where the one battery module 60 is arranged adjacent to the second sidewall 24. Alternatively, in some embodiments, the battery 100 may include a plurality of battery modules 60, where one of the plurality of battery modules 60 is adjacent to the second sidewall 24 in the second direction y, and this battery module 60 may be a side battery module 60.

A plurality of battery cells 101 in the side-wall battery module 60 are bound by the strapping member 70, where the strapping member 70 has a side portion 75, and the side portion 75 is located on a side of the plurality of battery cells 101 in the side-wall battery module 60 facing the second sidewall 24. "The second sidewall 24 is located on a side of the side portion 75 close to the first surface 21" can be understood as, in the third direction z, the second sidewall 24 being positioned below the side portion 75, or, from a perspective in a direction from the first surface 21 toward the first housing 10, this perspective first passes through the second sidewall 24 and then the side portion 75.

In the above solution, the side battery module 63 is arranged adjacent to the second sidewall 24. In a direction perpendicular to the first surface 21, the side battery module 63 can be constrained by both the strapping member 70 and the second sidewall 24, ensuring that the side battery module 63 is stably disposed in the closed space 102. The second sidewall 24 is located on a side of the side portion 75 close to the first surface 21, which can also be understood as that the second sidewall 24 having a dimension in the direction perpendicular to the first surface 21 can be made as small as possible while ensuring that the side battery module 63 is stably disposed in the closed space 102 under the constraint of the strapping member 70.

According to some embodiments of the present application, referring to FIG. 24, along the second direction y, the side portion 75 and the second sidewall 24 are offset, and along a direction perpendicular to the first surface 21, a projection of the side portion 75 and a projection of the second sidewall 24 at least partially overlap.

In the above solution, by configuring a projection of the side portion 75 and a projection of the second sidewall 24 along the second direction y to be offset, and the projection of the side portion 75 and the projection of the second sidewall 24 along a direction perpendicular to the first surface 21 to at least partially overlap, the space occupied by the strapping member 70 in the second direction y can be effectively reduced, improving the utilization rate of the closed space 102 by the plurality of battery modules 60, and thus enhancing the volumetric energy density of the battery 100.

According to some embodiments of the present application, referring to FIG. 17, the second housing 20 includes a second end wall 23, where the first surface 21 is located on the second end wall 23, the battery 100 further includes a plurality of mounting portions 90, and the plurality of mounting portions 90 are all located on a surface of the second end wall 23 facing away from the first surface 21.

The mounting portion 90 is a component disposed on the second end wall 23. The mounting portion 90 is configured to mount the battery 100 onto an electric apparatus. The mounting portion 90 may be a connecting structure such as a nut or a connecting bracket disposed on the second end wall 23. In some embodiments, the mounting portions 90 may be provided in plurality. In some embodiments, the mounting portion 90 may be a threaded hole structure of M8, M10, M12, or M16 disposed on the second end wall 23.

In the above solution, the second end wall 23 is provided with a plurality of mounting portions 90 to enable the battery 100 to be stably mounted on the body of an electric apparatus, providing stable electrical energy to the electric apparatus.

In some embodiments, the second housing 20 includes a second end wall 23, where the first surface 21 is located on the second end wall 23, and a cross beam 91 is disposed on the second end wall 23 (as shown in FIG. 17), where the cross beam 91 can enhance the structural strength of the second end wall 23. The mounting portion 90 may be disposed on the cross beam 91. For example, the mounting portion 90 may be a threaded hole structure disposed on the cross beam 91. The second end wall 23 is provided with through holes corresponding to the mounting portion 90, allowing a mounting member to connect to the mounting portion 90 on the cross beam through the through holes in the second end wall 23.

According to some embodiments of the present application, along a direction perpendicular to the first surface 21, the projections of the plurality of mounting portions 90 are entirely within the projection range of the first surface 21.

In the above solution, by configuring projections of the mounting portions 90 along a direction perpendicular to the first surface 21 to be entirely within the projection range of the first surface 21, the mounting portions 90 do not occupy space outside the first surface 21, resulting in the battery 100 having a compact structure with high volumetric energy density.

According to some embodiments of the present application, the battery cell 101 is a blade battery cell.

In some embodiments, the blade battery cell may be a battery cell 101 with a thin thickness and a long length.

In some embodiments, along the length direction of the blade battery cell, the closed space 102 within the battery 100 can accommodate one blade battery cell 101.

In the above solution, by configuring the battery cells 101 in the battery 100 as blade battery cells, the volumetric energy density of the battery 100 can be effectively enhanced.

According to some embodiments of the present application, an electric apparatus is further provided, where the electric apparatus includes a body and a battery 100 according to any one of the first aspect, and the battery 100 is configured to provide electrical energy to the body.

In the above solution, the electric apparatus employs the battery 100 provided above with a higher energy density, resulting in longer endurance and meeting more electrical energy demands.

According to some embodiments of the present application, the first sealing surface 11 and the second sealing surface 22 are parallel to a first direction x, and the first sealing surface 11 and the second sealing surface 22 intersect with a second direction y, where the first direction x and the second direction y are both parallel to the first surface 21.

In the above solution, by configuring the first sealing interface 103 to intersect with the second direction y, where the second direction y is parallel to the first surface 21, the space occupied by the first sealing interface 103 in the second direction y can be reduced while maintaining good sealing performance between the first sealing surface 11 and the second sealing surface 22, thereby improving the space utilization rate of the battery 100 in the second direction y to accommodate more battery cells 101 or reduce the volume of the battery 100, thus enhancing the volumetric energy density of the battery 100. For example, configuring the second sealing interface to intersect with the second direction y enables a sealed connection between the first housing 10 and the second housing 20 without requiring a flange structure protruding along the second direction y, thereby improving the space utilization rate of the battery 100 in the second direction y to accommodate more battery cells 101 or reduce the volume of the battery 100, thus enhancing the volumetric energy density of the battery 100.

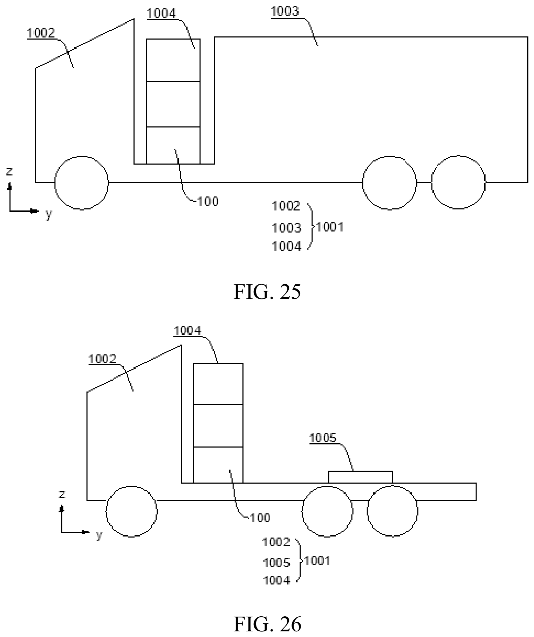

According to some embodiments of the present application, referring to FIG. 25, FIG. 25 is a schematic diagram of an electric apparatus according to some embodiments of the present application.

The body 1001 includes a truck frame, where the truck frame includes a cab 1002, a cargo compartment 1003, and a battery rack 1004 located between the cab 1002 and the cargo compartment 1003, the battery rack 1004 is configured to hold the battery 100, and the second direction y is a direction from the cab 1002 toward the cargo compartment 1003.

The electric apparatus may be a truck, where the truck may include a truck frame and a battery 100. The truck frame includes a cab 1002, a cargo compartment 1003, and a battery rack 1004 located between the cab 1002 and the cargo compartment. The battery rack 1004 can hold the battery 100, and one or more batteries 100 may be provided.

In the above solution, the second direction y is the direction from the cab 1002 toward the cargo compartment 1003. Thus, the electric apparatus employs the battery 100 provided above, effectively utilizing the space between the cab 1002 and the cargo compartment 1003. By configuring the first sealing interface 103 on the battery 100 to intersect with the first surface 21, the overall space occupied by the battery 100 in the second direction y can be reduced without compromising the sealing performance of the battery 100, allowing the cargo compartment 1003 to occupy more space in the second direction y to carry more cargo.

According to some embodiments of the present application, referring to FIG. 26, FIG. 26 is a schematic diagram of an electric apparatus according to some embodiments of the present application. The body 1001 includes a tractor unit, where the tractor unit includes a cab 1002, a fifth wheel 1005, and a battery rack 1004 located between the cab 1002 and the fifth wheel 1005, the battery rack 1004 is configured to hold the battery 100, and the second direction y is a direction from the cab 1002 toward the fifth wheel 1005.

The electric apparatus may be a tractor, where the tractor may include a tractor unit and a battery 100. The tractor unit includes a cab 1002, a fifth wheel 1005, and a battery rack 1004 located between the cab 1002 and the fifth wheel 1005. The battery rack 1004 can hold the battery 100, and one or more batteries 100 may be provided. The fifth wheel 1005 may be used to tow a cargo compartment.

In the above solution, the second direction y is the direction from the cab 1002 toward the fifth wheel 1005. Thus, the electric apparatus employs the battery 100 provided above, effectively utilizing the space between the cab 1002 and the fifth wheel 1005. By configuring the first sealing interface 103 on the battery 100 to intersect with the first surface 21, the overall space occupied by the battery 100 in the second direction y can be reduced without compromising the sealing performance of the battery 100, allowing the fifth wheel 1005 to be positioned closer to the cab, thereby utilizing more space of the vehicle frame in the second direction y for mounting a cargo compartment to carry more cargo. Alternatively, the space saved in the second direction y can be used to enhance the endurance capability of the battery 100.

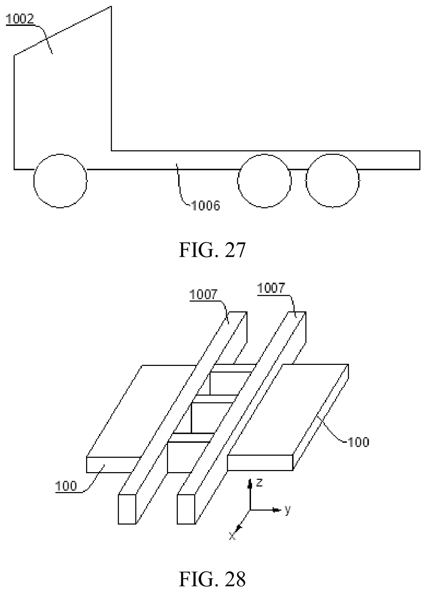

According to some embodiments of the present application, referring to FIG. 27 and FIG. 28, FIG. 27 is a schematic diagram of an electric apparatus according to some embodiments of the present application, and FIG. 28 is a schematic diagram of a vehicle frame beam and a battery according to some embodiments of the present application. The body includes a vehicle frame, where the vehicle frame includes a vehicle frame beam 1006, and along a width direction of the vehicle frame, the battery 100 is mounted on at least one side of the vehicle frame beam 1006, and the second direction y is the width direction of the vehicle frame beam.

The width direction of the vehicle frame may be perpendicular to the driving direction of the vehicle, and the width direction of the vehicle frame is perpendicular to the length direction of the vehicle frame. Along the length direction of the vehicle frame, one end of the vehicle frame is provided with a cab 1002.

The electric apparatus may include a commercial vehicle, for example, the electric apparatus may be a heavy truck. The vehicle frame of the heavy truck has a vehicle frame beam 1006, for example, the vehicle frame beam 1006 includes a pair of longitudinal beams 1007. The longitudinal beams 1007 are spaced apart in the width direction of the vehicle, that is, the two longitudinal beams 1007 are spaced apart along the second direction y. The longitudinal beams 1007 extend along the length direction of the vehicle.

In some embodiments, the battery 100 may be disposed on a side of one longitudinal beam 1007 facing away from the other longitudinal beam 1007, and in some embodiments, the battery may also be disposed between the two longitudinal beams 1007.

In the above solution, the second direction y is the width direction of the vehicle frame beam 1006. Thus, the electric apparatus employs the battery 100 provided above, effectively utilizing the space in the width direction of the vehicle frame beam 1006. By configuring the first sealing interface 103 on the battery 100 to intersect with the first surface 21, the overall space occupied by the battery 100 in the second direction y can be reduced without compromising the sealing performance of the battery 100. When the arrangement space of the battery 100 in the width direction of the vehicle frame beam 1006 is limited, the space saved by the above configuration of the first sealing interface 103 can be used to enhance the endurance capability of the battery 100 itself.

According to some embodiments of the present application, referring to FIG. 2 to FIG. 13, a battery 100 is further provided. The battery 100 includes a first housing 10, a second housing 20, and a battery cell 101. The first housing 10 is the upper housing of the battery 100, and the second housing 20 is the lower housing of the battery 100. The second housing 20 and the first housing 10 are connected to each other to jointly define a closed space 102, and the battery cell 101 is disposed in the closed space 102. The first housing 10 includes a first end wall 12 and two first sidewalls 13, where the first end wall 12 may be the top wall of the battery 100, and the two first sidewalls 13 are disposed opposite each other in the second direction y (the width direction of the battery 100) on the first end wall 12. The second housing 20 includes a second end wall 23, two second sidewalls 24, and two third sidewalls 25, where the second end wall 23 may be the bottom wall of the battery 100, the two second sidewalls 24 are respectively disposed at both ends of the second end wall 23 in the second direction y, and the two third sidewalls 25 are respectively disposed at both ends of the second end wall 23 in the first direction x.

The inner surface of the first sidewall 13 facing the second sidewall 24 forms a first sealing surface 11. The second sealing surface 22 is formed on the outer surface of the second sidewall 24 facing the first sidewall 13 and on a side surface of the second end wall 23 facing the first sidewall 13. A first sealing member 30 is disposed between the first sealing surface 11 and the second sealing surface 22, and a first fastener 50 passes through the first sidewall 13 and the first fastener 50 and is locked into the second end wall 23 to fasten the first sealing member 30 between the first sealing surface 11 and the second sealing surface 22, forming a first sealing interface 103 between the first sealing surface 11 and the second sealing surface 22.

The third sidewall 25 has a first flat surface 250, a second flat surface 251, and a transition surface 252 disposed between the first flat surface 250 and the second flat surface 251. The first flat surface 250, the second flat surface 251, and the transition surface 252 are connected to the first housing 10, a second sealing member 40 is disposed between the first flat surface 250, the second flat surface 251, and the transition surface 252 and the first housing 10, and the first sealing member 30 and the second sealing member 40 are integrally formed.

The above description is only of preferred embodiments of the present application and is not intended to limit the present application. For those skilled in the art, various modifications and variations may be made to the present application. Any modification, equivalent replacement, or improvement made without departing from the spirit and principle of the present application shall fall within the protection scope of the present application.

## Claims

1. A battery comprising:
a battery cell;
a first housing comprising a first sealing surface;
a second housing comprising a first surface and a second sealing surface, wherein the first surface is configured to support the battery cell, the first housing and the second housing jointly define a closed space for accommodating the battery cell, and the first sealing surface and the second sealing surface cooperatively form a first sealing interface for sealing the closed space; wherein
the first sealing interface intersects with the first surface.

2. The battery according to claim 1, wherein
the first sealing surface and the second sealing surface are parallel to a first direction, and the first sealing surface and the second sealing surface intersect with a second direction, wherein the first direction and the second direction are both parallel to the first surface.

3. The battery according to claim 2, wherein:
a first sealing member is disposed between the first sealing surface and the second sealing surface, wherein the first sealing member is located on a side, closer to the closed space, of one of the first sealing surface and the second sealing surface that is farther from the closed space.

4. The battery according to claim 3, wherein:
along a width direction of the first sealing member, one end of the first sealing member is close to the closed space, the other end of the first sealing member is close to an exterior of the battery, and the width direction of the first sealing member intersects with the first surface.

5. The battery according to claim 3 or 4, wherein:
the second housing comprises a second end wall and a second sidewall, wherein the first surface is located on the second end wall, at least a portion of the second sealing surface is disposed on the second sidewall, the second sidewall is connected to an end of the second end wall in the second direction, and along the second direction, a projection of the second sidewall is at least partially located on a side of the first surface close to the battery cell.

6. The battery according to claim 5, wherein:
along the second direction, a projection of the first sealing member is at least partially located on a side of the first surface close to the battery cell.

7. The battery according to claim 6, wherein:
along the second direction, the projection of the first sealing member at least partially overlaps with a projection of the battery cell.

8. The battery according to claim 3 or 4, wherein:
the second housing comprises a second end wall, wherein the first surface is located on the second end wall, and the second sealing surface is a sidewall surface of the second end wall perpendicular to the second direction.

9. The battery according to any one of claims 5 to 8, wherein:
the first housing comprises a first end wall and a first sidewall connected to each other, wherein the first end wall comprises a first end wall surface disposed opposite to the first surface, at least a portion of the first sealing surface is disposed on the first sidewall, and at least a portion of the first sidewall is located on a side of the first end wall surface close to the first surface.

10. The battery according to claim 9, wherein:
at least a portion of the first sidewall is located on a side of the first surface away from the battery cell.

11. The battery according to claim 9 or 10, wherein:
the second housing further comprises a third sidewall, wherein the third sidewall is disposed at an end of the second end wall in the first direction, and the third sidewall extends toward the first housing and is connected to the first housing.

12. The battery according to claim 11, wherein:
the third sidewall comprises a first flat surface facing away from the first surface and a second flat surface intersecting with the second direction, wherein the first flat surface is configured to be sealingly connected to the first end wall, and the second flat surface is configured to be sealingly connected to the first sidewall.

13. The battery according to claim 12, wherein:
the battery further comprises a second sealing member, wherein the second sealing member is disposed between the third sidewall and the first housing.

14. The battery according to claim 13, wherein:
the first flat surface and the second flat surface are connected by a transition surface, wherein the transition surface comprises a sloped surface and/or a curved surface, a mating surface is formed at the junction between the first end wall and the first sidewall, and the mating surface is disposed corresponding to the transition surface.

15. The battery according to claim 14, wherein:
the second sealing member comprises a first sub-sealing member, a second sub-sealing member, and a third sub-sealing member, wherein the first sub-sealing member is disposed between the first flat surface and the first end wall, the second sub-sealing member is disposed between the second flat surface and the first sidewall, and the third sub-sealing member is disposed between the transition surface and the mating surface.

16. The battery according to any one of claims 5 to 15, wherein:
the battery further comprises a first fastener, wherein the first fastener passes through the first sealing interface along the second direction and is locked into an interior of the second end wall.

17. The battery according to claim 16, wherein:
a portion of the first fastener locked into the second end wall is located on a side of the first surface away from the closed space.

18. The battery according to claim 16 or 17, wherein:
along a direction perpendicular to the first surface, a projection of the first fastener at least partially overlaps with the projection of the battery cell.

19. The battery according to any one of claims 16 to 18, wherein:
the second housing further comprises a third sidewall, wherein the third sidewall is disposed at an end of the second end wall in the first direction, the battery further comprises a second fastener, wherein the second fastener is configured to connect the third sidewall and the first housing, and the second fastener is locked into an interior of the third sidewall.

20. The battery according to claim 2, wherein:
a first sealing member is disposed between the first sealing surface and the second sealing surface, wherein along a width direction of the first sealing member, one end of the first sealing member is close to the closed space, the other end of the first sealing member is close to an exterior of the battery, and the width direction of the first sealing member is parallel to the first surface.

21. The battery according to claim 20, wherein:
the second housing comprises an enclosure frame, wherein along the first direction, the enclosure frame forms an opening, the first housing comprises a plug plate, and the plug plate is at least partially inserted into an interior of the enclosure frame along the first direction to close the opening.

22. The battery according to claim 21, wherein:
the first housing further comprises an extension wall plate, wherein at least a portion of the first sealing surface is disposed on the extension wall plate, the extension wall plate is disposed at an end of the plug plate in the second direction, and the plug plate has a cover surface facing the battery cell;
along the second direction, a projection of the extension wall plate is at least partially located on a side of the cover surface close to the battery cell.

23. The battery according to claim 22, wherein:
along the second direction, a projection of the first sealing member is at least partially located on a side of the cover surface close to the battery cell.

24. The battery according to any one of claims 21 to 23, wherein:
along the second direction, a projection of the first sealing member at least partially overlaps with a projection of the battery cell.

25. The battery according to claim 21, wherein:
the second sealing surface is disposed on an inner wall surface of the enclosure frame, and at least a portion of the first sealing surface is disposed on an outer wall surface of the plug plate.

26. The battery according to any one of claims 21 to 25, wherein:
the battery further comprises a first connecting member, wherein the first connecting member passes through the first sealing interface along the second direction and is locked into the plug plate.

27. The battery according to claim 26, wherein:
along the first direction, a projection of the first connecting member at least partially overlaps with a projection of the battery cell.

28. The battery according to any one of claims 2 to 27, wherein:
the battery comprises at least one battery module, wherein the battery module comprises a plurality of the battery cells arranged in a group, the battery module is provided with a strapping member, and the strapping member is configured to bind the plurality of the battery cells arranged in a group.

29. The battery according to claim 28, wherein:
the battery module comprises a first battery module and a second battery module arranged adjacent to each other along the second direction; the first battery module is provided with a first strapping member, and the second battery module is provided with a second strapping member, wherein along the second direction, a first portion of the first strapping member is disposed on a side of the first battery module facing the second battery module, and along the second direction, a second portion of the second strapping member is disposed on a side of the second battery module facing the first battery module; and
along the second direction, a projection of the first portion and a projection of the second portion are offset, and along a direction perpendicular to the first surface, the projection of the first portion and the projection of the second portion at least partially overlap.

30. The battery according to claim 28, wherein:
the battery modules are provided in plurality; and
the strapping member comprises an outer frame and a partition strip, wherein the partition strip is disposed inside the outer frame and divides an interior of the outer frame into a plurality of subspaces, with each of the battery modules respectively disposed in the subspace.

31. The battery according to claim 28, wherein:
the battery modules are provided in plurality, wherein the plurality of battery modules are arranged along the second direction; and
the battery further comprises an end plate, wherein the end plate is connected to end faces of the plurality of battery modules in the first direction, and the strapping member is connected to the end plate.

32. The battery according to claim 28, wherein:
the second housing comprises a second end wall and a second sidewall, wherein the first surface is located on the second end wall, the first sealing surface is located on the second sidewall, and the second sidewall is connected to an end of the second end wall in the second direction; and
the battery module comprises a side battery module arranged adjacent to the second sidewall in the second direction, and the strapping member comprises a side portion, wherein the side portion is disposed on a side of the side battery module facing the second sidewall in the second direction, and the second sidewall is located on a side of the side portion close to the first surface.

33. The battery according to claim 32, wherein:
along the second direction, the side portion and the second sidewall are offset, and along a direction perpendicular to the first surface, a projection of the side portion and a projection of the second sidewall at least partially overlap.

34. The battery according to any one of claims 1 to 33, wherein:
the second housing comprises a second end wall, wherein the first surface is located on the second end wall, the battery further comprises a plurality of mounting portions, and the plurality of mounting portions are all located on a surface of the second end wall facing away from the first surface.

35. The battery according to claim 34, wherein:
along a direction perpendicular to the first surface, projections of the plurality of mounting portions are entirely within a projection range of the first surface.

36. The battery according to any one of claims 1 to 35, wherein:
the battery cell is a blade battery cell.

37. An electric apparatus comprising:
a body and the battery according to any one of claims 1 to 36, wherein the battery is configured to provide electrical energy to the body.

38. The electric apparatus according to claim 37, wherein:
the first sealing surface and the second sealing surface are parallel to a first direction, and the first sealing surface and the second sealing surface intersect with a second direction, wherein the first direction and the second direction are both parallel to the first surface.

39. The electric apparatus according to claim 38, wherein:
the body comprises a truck frame, wherein the truck frame comprises a cab, a cargo compartment, and a battery rack located between the cab and the cargo compartment, the battery rack is configured to hold the battery, and the second direction is a direction from the cab toward the cargo compartment.

40. The electric apparatus according to claim 38, wherein the body comprises a tractor unit, wherein the tractor unit comprises a cab, a fifth wheel, and a battery rack located between the cab and the fifth wheel, the battery rack is configured to hold the battery, and the second direction is a direction from the cab toward the fifth wheel.

41. The electric apparatus according to claim 38, wherein the body comprises a vehicle frame, wherein the vehicle frame comprises a vehicle frame beam, and along a width direction of the vehicle frame, the battery is mounted on at least one side of the vehicle frame beam, and the second direction is the width direction of the vehicle frame beam.
